(19) **Europäisches Patentamt / European Patent Office / Office européen des brevets**

(11) **EP 4 572 513 A1**

(12) **EUROPEAN PATENT APPLICATION**
published in accordance with Art. 153(4) EPC

(43) Date of publication:
**18.06.2025 Bulletin 2025/25**

(21) Application number: **23862353.2**

(22) Date of filing: **04.09.2023**

(51) International Patent Classification (IPC):
**H04W 74/08** (2024.01)

(52) Cooperative Patent Classification (CPC):
**H04W 52/02; H04W 52/14; H04W 52/24;
H04W 52/36; H04W 74/00; H04W 74/08;
H04W 74/0836**

(86) International application number:
**PCT/CN2023/116847**

(87) International publication number:
**WO 2024/051659 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **07.09.2022 CN 202211091016**

(71) Applicant: **Huawei Technologies Co., Ltd.
Shenzhen, Guangdong 518129 (CN)**

(72) Inventors:
• **LI, Jun
  Shenzhen, Guangdong 518129 (CN)**
• **TIE, Xiaolei
  Shenzhen, Guangdong 518129 (CN)**
• **JIAO, Shurong
  Shenzhen, Guangdong 518129 (CN)**

(74) Representative: **Gill Jennings & Every LLP
The Broadgate Tower
20 Primrose Street
London EC2A 2ES (GB)**

(54) **RANDOM ACCESS METHOD AND COMMUNICATION APPARATUS**

(57) This application provides a random access method and a communication apparatus. The method includes: A terminal device determines at least one preamble for performing an $n$th random access procedure, where the preamble is used to request random access, and $n$ is a positive integer. The terminal device sends a first part of the at least one preamble to a network device in the $n$th random access procedure, where sending of a second part of the at least one preamble in the $n$th random access procedure is canceled. The terminal device determines that a count value of a preamble power ramping counter in an $(n+1)$th random access procedure is the same as a count value of the preamble power ramping counter in the $n$th random access procedure, where the preamble power ramping counter is configured to determine a transmit power of the preamble. This can reduce unnecessary power consumption and reduce communication interference.

400

S401: Determine at least one preamble for performing an $n$th random access procedure, where the preamble is used to request random access, and $n$ is a positive integer

S402: Send a first part of the at least one preamble in the $n$th random access procedure, where sending of a second part of the at least one preamble in the $n$th random access procedure is canceled

S403: Determine that a count value of a preamble ramping counter in an $(n+1)$th random access procedure is the same as a count value of the preamble ramping counter in the $n$th random access procedure

FIG. 4

**Description**

This application claims priority to Chinese Patent Application No. 202211091016.9, filed with the China National Intellectual Property Administration on September 7, 2022 and entitled "RANDOM ACCESS METHOD AND COMMUNICATION APPARATUS", which is incorporated herein by reference in its entirety.

**TECHNICAL FIELD**

This application relates to the communication field, and more specifically, to a random access method and a communication apparatus.

**BACKGROUND**

In a mobile communication system, a terminal device may establish a communication connection to a network device through a random access procedure. The random access procedure may be further used for radio link failure recovery, uplink synchronization calibration, and the like of the terminal device. Because the random access procedure is uncertain, after one random access procedure fails, the terminal device may initiate a random access procedure again. In the random access procedure initiated again, the terminal device may increase a target received power of a preamble by using a power ramping mechanism, to increase a random access success probability. However, currently, in some application scenarios, the random access procedure still has a problem of an improper design, and needs to be further optimized.

**SUMMARY**

Embodiments of this application provide a random access method and a communication apparatus, to reduce unnecessary power consumption and reduce communication interference.

According to a first aspect, a random access method is provided. The method may be performed by a terminal device or a module (for example, a chip) configured (or used) in the terminal device.

The method includes: determining at least one preamble for performing an $n^{th}$ random access procedure, where the preamble is used to request random access, and n is a positive integer; sending a first part of the at least one preamble to a network device in the $n^{th}$ random access procedure, where sending of a second part of the at least one preamble in the $n^{th}$ random access procedure is canceled; and determining that a count value of a preamble power ramping counter in an $(n+1)^{th}$ random access procedure is the same as a count value of the preamble power ramping counter in the $n^{th}$ random access procedure, where the preamble power ramping counter is configured to determine a transmit power of the at least one preamble.

According to the foregoing solution, when the terminal device does not completely send the preamble in the $n^{th}$ random access procedure, the $n^{th}$ random access procedure may fail because of cancellation of sending of a part of preambles rather than an insufficient preamble power. Therefore, this application proposes that, in the $(n+1)^{th}$ random access procedure, the preamble power ramping counter does not perform accumulative counting, and the count value of the preamble power ramping counter in the $n^{th}$ random access procedure is still used. In this way, a target received power of the preamble in the $(n+1)^{th}$ random procedure that is determined by the terminal device based on the count value of the preamble power ramping counter does not change (that is, the target received power is not increased), and the terminal device determines the transmit power of the preamble based on the target received power of the preamble and a path loss. This can reduce unnecessary preamble power consumption of the terminal device and reduce communication interference to another device.

With reference to the first aspect, in some implementations of the first aspect, the second part includes a part of one preamble in the at least one preamble; or the at least one preamble includes a plurality of repetitions of one preamble, and the second part includes at least a part or all of one repetition in the plurality of repetitions.

The foregoing solution may be applied to a scenario in which the terminal device does not repeatedly transmit a preamble in a random access procedure, and may also be applied to a scenario in which the terminal device repeatedly transmits a preamble in a random access procedure, to reduce power consumption and communication interference in a corresponding application scenario.

With reference to the first aspect, in some implementations of the first aspect, a count value of a preamble transmission counter in the $(n+1)^{th}$ random access procedure is the same as a count value of the preamble transmission counter in the $n^{th}$ random access procedure.

According to the foregoing solution, if the terminal device does not completely send a random access request message of the $n^{th}$ random access procedure, and the preamble transmission counter still performs accumulative counting, a random access success probability of the terminal device is reduced. Therefore, this application proposes that, when the terminal device does not completely send the random access request message of the $n^{th}$ random access procedure, the preamble transmission counter does not perform accumulative counting in the $(n+1)^{th}$ random access procedure, to increase the random access success probability.

With reference to the first aspect, in some implementations of the first aspect, the $n^{th}$ random access procedure is a 2-step random access procedure, and the method further includes: canceling a PUSCH transmission in a random access request message of the 2-step random access procedure.

According to the foregoing solution, in a scenario in which the terminal device does not repeatedly transmit the preamble, because the preamble is not completely transmitted, the network device cannot detect the preamble sent by the terminal device and therefore cannot learn that a PUSCH transmission exists, and the terminal device cancels the PUSCH transmission, so that power consumption and a waste of communication resources can be reduced. **In** a scenario in which the terminal device repeatedly transmits the preamble, because the second part of the preamble is canceled, a probability that the network device detects the preamble is reduced, a probability that the network device receives a PUSCH transmission is further reduced, and the terminal device cancels the PUSCH transmission, so that power consumption and a waste of communication resources can be reduced.

With reference to the first aspect, in some implementations of the first aspect, the $n^{th}$ random access procedure is a 2-step random access procedure, and the at least one preamble includes a plurality of repetitions of one preamble.

**In** an implementation, if the first part includes all of the at least one repetition, a PUSCH transmission in the random access request message is canceled.

According to the foregoing solution, in a scenario in which the terminal device repeatedly transmits the preamble, if the first part includes at least one complete repetition of the preamble, the network device may detect the preamble and therefore receive a PUSCH transmission, and the terminal device may not cancel the PUSCH transmission in the random access request message, to increase a random access success probability.

**In** another implementation, if the first part does not include all of one repetition, a PUSCH transmission in the random access request message is sent.

According to the foregoing solution, in a scenario in which the terminal device repeatedly transmits the preamble, if the first part does not include one complete repetition, the network device cannot detect the preamble sent by the terminal device and therefore cannot learn that a PUSCH transmission exists, and the terminal device cancels the PUSCH transmission, so that power consumption and a waste of communication resources can be reduced.

With reference to the first aspect, in some implementations of the first aspect, a spatial domain filtering parameter used for the at least one preamble in the $n^{th}$ random access procedure is the same as a spatial domain filtering parameter used for the at least one preamble in the $(n+1)^{th}$ random access procedure; and/or a synchronization signal and physical broadcast channel block SSB associated with a random access channel resource used in the $n^{th}$ random access procedure is the same as an SSB associated with a random access channel resource used in the $(n+1)^{th}$ random access procedure; and/or a reference signal associated with the random access channel resource used in the $n^{th}$ random access procedure is the same as a reference signal associated with the random access channel resource used in the $(n+1)^{th}$ random access procedure.

For example, that SSBs are the same specifically means that an identifier of the SSB associated with the random access channel resource used in the $n^{th}$ random access procedure is the same as that of the SSB associated with the random access channel resource used in the $(n+1)^{th}$ random access procedure. In addition, that reference signals are the same means that a reference signal resource identifier of the reference signal associated with the random access channel resource used in the $n^{th}$ random access procedure is the same as that of the reference signal associated with the random access channel resource used in the $(n+1)^{th}$ random access procedure.

With reference to the first aspect, in some implementations of the first aspect, the method further includes: when a first condition is satisfied, sending the at least one preamble to the network device in the $(n+1)^{th}$ random access procedure, where the first condition includes that no random access response message from the network device is received and/or random access contention resolution in the $n^{th}$ random access procedure fails.

According to the foregoing solution, when the first condition is satisfied, if the terminal device determines that the $n^{th}$ random access procedure does not succeed, the terminal device sends the at least one preamble to the network device in the $(n+1)^{th}$ random access procedure, and does not increase the target received power of the at least one preamble, so that power consumption of the terminal device and communication interference to another device are reduced.

According to a second aspect, a random access method is provided. The method may be performed by a terminal device or a module (for example, a chip) configured (or used) in the terminal device.

The method includes: sending a plurality of repetitions of a preamble to a network device in an $n^{th}$ random access procedure, where the preamble is used to request random access; and sending a plurality of repetitions of the preamble to the network device in an $(n+1)^{th}$ random access procedure, where when it is determined that spatial domain filtering parameters used for the plurality of repetitions in the $(n+1)^{th}$ random access procedure are different from spatial domain filtering parameters used for the plurality of repetitions in the $n^{th}$ random access procedure, a count value of a first preamble power ramping counter in the $(n+1)^{th}$ random access procedure is the same as a count value of the first preamble power ramping counter in the $n^{th}$ random access procedure, where the first preamble power ramping counter is configured to determine a transmit power of at least one of the plurality of repetitions, and m is a positive integer.

According to the foregoing solution, when the terminal device attempts to send at least one of the plurality of repetitions by using a spatial domain filtering parameter different from that in a previous random access procedure, count values of the first preamble power ramping counter are not accumulated. Because the terminal device attempts to increase a random access success probability by changing a spatial domain filtering parameter, a target received power of the preamble may not be increased, so that unnecessary power consumption of the terminal device and communication interference to another device are reduced.

With reference to the second aspect, in some implementations of the second aspect, that spatial domain filtering parameters used for the plurality of repetitions in the $(n+1)^{th}$ random access procedure are different from spatial domain filtering parameters used for the plurality of repetitions in the $n^{th}$ random access procedure includes: a second spatial domain filtering parameter set is different from a first spatial domain filtering parameter set, where the first spatial domain filtering parameter set is a set of the spatial domain filtering parameters used for the plurality of repetitions in the $n^{th}$ random access procedure, and the second spatial domain filtering parameter set is a set of the spatial domain filtering parameters used for the plurality of repetitions in the $(n+1)^{th}$ random access procedure.

According to the foregoing solution, that spatial domain filtering parameters used for sending the preamble in two consecutive random access procedures are different specifically means that spatial domain filtering parameter sets used for sending a plurality of repetitions of the preamble are different. In other words, if a spatial domain filtering parameter used for at least one repetition does not belong to a spatial domain filtering parameter set used for sending the preamble in a previous random access procedure, it is considered that the terminal device changes a spatial domain filtering parameter for sending the preamble. Different definitions of spatial domain filtering parameters used for sending the preamble in the two consecutive random access procedures are clarified, so that the terminal device accurately determines whether to perform accumulative counting on a preamble power ramping counter.

With reference to the second aspect, in some implementations of the second aspect, the first preamble power ramping counter is specifically configured to determine a transmit power of each of the plurality of repetitions.

According to the foregoing solution, the plurality of repetitions of the preamble share a same preamble power ramping counter, thereby reducing implementation complexity.

With reference to the second aspect, in some implementations of the second aspect, that spatial domain filtering parameters used for the plurality of repetitions in the $(n+1)^{th}$ random access procedure are different from spatial domain filtering parameters used for the plurality of repetitions in the $n^{th}$ random access procedure includes: a spatial domain filtering parameter used for an $m^{th}$ repetition in the plurality of repetitions in the $(n+1)^{th}$ random access procedure is different from a spatial domain filtering parameter used for an $m^{th}$ repetition in the plurality of repetitions in the $n^{th}$ random access procedure, where m is a positive integer.

According to the foregoing solution, that spatial domain filtering parameters used for sending the preamble in two consecutive random access procedures are different specifically means that different spatial domain filtering parameters are used for at least one repetition in the plurality of repetitions in the two consecutive random access procedures, and different definitions of spatial domain filtering parameters used for sending the preamble in the two consecutive random access procedures are clarified, so that the terminal device accurately determines whether to perform accumulative counting on a preamble power ramping counter.

With reference to the second aspect, in some implementations of the second aspect, the plurality of repetitions are in one-to-one correspondence with a plurality of preamble power ramping counters, one of the plurality of preamble power ramping counters is configured to determine a transmit power of a corresponding repetition, and the $m^{th}$ repetition corresponds to the first preamble power ramping counter.

According to the foregoing solution, the terminal device maintains one preamble power ramping counter for each of the plurality of repetitions, and when spatial domain filtering parameters used for one repetition in two consecutive random access procedures are different, a corresponding preamble power ramping counter does not perform accumulative counting, and a count value is the same as a count value in a previous random access procedure. This can improve accuracy of controlling the transmit power of each repetition of the preamble by the terminal device.

With reference to the second aspect, in some implementations of the second aspect, when a spatial domain filtering parameter used for a $k^{th}$ repetition in the plurality of repetitions in the $(n+1)^{th}$ random access procedure is the same as a spatial domain filtering parameter used for a $k^{th}$ repetition in the plurality of repetitions in the $n^{th}$ random access procedure, a count value of a second preamble power ramping counter corresponding to the $k^{th}$ repetition in the $(n+1)^{th}$ random access procedure is different from a count value of the second preamble power ramping counter in the $n^{th}$ random access procedure, where k is a positive integer.

According to the foregoing solution, the terminal device maintains one preamble power ramping counter for each of the plurality of repetitions, and when spatial domain filtering parameters used for one repetition in two consecutive random access procedures are the same, a corresponding preamble power ramping counter performs accumulative counting, and a count value is increased by 1 based on a count value in a previous random access procedure. This can improve accuracy of controlling the transmit power of each repetition of the preamble by the terminal device.

With reference to the second aspect, in some implementations of the second aspect, a synchronization signal and physical broadcast channel block SSB associated with a random access channel resource used in the $n^{th}$ random access procedure is the same as an SSB associated with a random access channel resource used in the $(n+1)^{th}$ random access procedure; and/or a reference signal associated with the random access channel resource used in the $n^{th}$ random access procedure is the same as a reference signal associated with the random access channel resource used in the $(n+1)^{th}$ random access procedure.

With reference to the second aspect, in some implementations of the second aspect, the method further includes: when a first condition is satisfied, sending the at least one preamble to the network device in the $(n+1)^{th}$ random access procedure, where the first condition includes that no random access response message from the network device is received and/or random access contention resolution in the $n^{th}$ random access procedure fails.

According to the foregoing solution, when the first condition is satisfied, if the terminal device determines that the $n^{th}$ random access procedure does not succeed, the terminal device sends the plurality of repetitions of the preamble of the network device in the $(n+1)^{th}$ random access procedure, and does not increase the target received power because a spatial domain filtering parameter used for at least one repetition in the plurality of repetitions changes, so that power consumption of the terminal device and communication interference to another device are reduced.

With reference to the second aspect, in some implementations of the second aspect, different spatial domain filtering parameters are used for different repetitions in the plurality of repetitions; or a same spatial domain filtering parameter is used for at least two of the plurality of repetitions; or a same spatial domain filtering parameter is used for the plurality of repetitions.

With reference to the second aspect, in some implementations of the second aspect, a protocol predefines or the network device preconfigures the following: when a transmit power of the preamble in the $n^{th}$ random access procedure is greater than or equal to a maximum transmit power, a spatial domain filtering parameter used for at least one repetition in the plurality of repetitions in the $(n+1)^{th}$ random access procedure is allowed to be different from a spatial domain filtering parameter used for the at least one repetition in the $n^{th}$ random access procedure.

According to the foregoing solution, only when a current transmit power of the preamble reaches the maximum transmit power of the preamble, spatial domain filtering parameters used by the terminal device for some repetitions in the plurality of repetitions in two consecutive random access procedures are allowed to change. In this way, when the current transmit power of the preamble reaches the maximum transmit power, the terminal device may perform a random access procedure again by changing spatial domain filtering parameters used for some repetitions, to increase a random access success probability.

For example, first configuration information from the network device is received, where the first configuration information is used to configure that when a transmit power of the preamble in the $n^{th}$ random access procedure is greater than or equal to a maximum transmit power, a spatial domain filtering parameter used for at least one repetition in the plurality of repetitions in the $(n+1)^{th}$ random access procedure is allowed to be different from a spatial domain filtering parameter used for the at least one repetition in the $n^{th}$ random access procedure.

With reference to the second aspect, in some implementations of the second aspect, a protocol predefines or the network device preconfigures the following: a spatial domain filtering parameter used for each repetition in the plurality of repetitions in the $n^{th}$ random access procedure is the same as or different from a spatial domain filtering parameter used for each repetition in the $(n+1)^{th}$ random access procedure; or a protocol predefines or the network device preconfigures the following: spatial domain filtering parameters used for only some repetitions in the plurality of repetitions in the $n^{th}$ random access procedure are not allowed to be different from spatial domain filtering parameters used for some repetitions in the $(n+1)^{th}$ random access procedure.

According to the foregoing solution, the protocol may specify or the network device may preconfigure the following: spatial domain filtering parameters used by the terminal device for some repetitions in the plurality of repetitions in two consecutive random access procedures are not allowed to change. In other words, the terminal device may change spatial domain filtering parameters used for all repetitions in one random access procedure, to increase a random access success probability. Alternatively, the spatial domain filtering parameters used for all repetitions do not change, and the target received power is increased to increase the random access success probability.

For example, second configuration information is received from the network device, where the second configuration information is used to configure that the spatial domain filtering parameter used for each repetition in the plurality of repetitions in the $n^{th}$ random access procedure is the same as or different from the spatial domain filtering parameter used for each repetition in the $(n+1)^{th}$ random access procedure, or the second configuration information is used to configure that spatial domain filtering parameters used for only some repetitions in the plurality of repetitions in the $n^{th}$ random access procedure are not allowed to be different from spatial domain filtering parameters used for some repetitions in the $(n+1)^{th}$ random access procedure.

According to a third aspect, a random access method is provided. The method may be performed by a network device or a module (for example, a chip) configured (or used) in the network device.

The method includes: sending first configuration information to a terminal device, where the first configuration information is used to configure that when a transmit power of a preamble in an $n^{th}$ random access procedure is greater than or equal to a maximum transmit power, a spatial domain filtering parameter used for at least one of a plurality of repetitions in an $(n+1)^{th}$ random access procedure is allowed to be different from a spatial domain filtering parameter used for the at least one repetition in the $n^{th}$ random access procedure.

According to the foregoing solution, the network device may configure, for the terminal device by using configuration information, that only when a current transmit power of the preamble reaches the maximum transmit power of the preamble, spatial domain filtering parameters used by the terminal device for some repetitions in the plurality of repetitions in two consecutive random access procedures are allowed to change, so that the terminal device performs a random access procedure based on the configuration of the network device, to meet a network communication planning requirement.

According to a fourth aspect, a random access method is provided. The method may be performed by a network device or a module (for example, a chip) configured (or used) in the network device.

The method includes: sending second configuration information to a terminal device, where the second configuration information is used to configure that a spatial domain filtering parameter used for each of a plurality of repetitions in an $n^{th}$ random access procedure is the same as or different from a spatial domain filtering parameter used for each repetition in an $(n+1)^{th}$ random access procedure, or the second configuration information is used to configure that spatial domain filtering parameters used for only some repetitions in the plurality of repetitions in the $n^{th}$ random access procedure are not allowed to be different from spatial domain filtering parameters used for some repetitions in the $(n+1)^{th}$ random access procedure.

According to the foregoing solution, the network device may configure, by using configuration information, that spatial domain filtering parameters used by the terminal device for some repetitions in the plurality of repetitions in two consecutive random access procedures are not allowed to change, so that the terminal device performs a random access procedure based on the configuration of the network device, to meet a network communication planning requirement.

According to a fifth aspect, a communication apparatus is provided. In a design, the apparatus may include modules for performing the method/operations/steps/actions described in the first aspect in one-to-one correspondence. The modules may be implemented by hardware circuits, software, or a combination of the hardware circuits and the software. In a design, the apparatus includes: a processing unit, configured to determine at least one preamble for performing an $n^{th}$ random access procedure, where the preamble is used to request random access, and n is a positive integer; and a transceiver unit, configured to send a first part of the at least one preamble to a network device in the $n^{th}$ random access procedure, where sending of a second part of the at least one preamble in the $n^{th}$ random access procedure is canceled. The processing unit is further configured to determine that a count value of a preamble power ramping counter in an $(n+1)^{th}$ random access procedure is the same as a count value of the preamble power ramping counter in the $n^{th}$ random access procedure, where the preamble power ramping counter is configured to determine a transmit power of the at least one preamble.

With reference to the fifth aspect, in some implementations of the fifth aspect, the $n^{th}$ random access procedure is a 2-step random access procedure, and the processing unit is further configured to cancel a PUSCH transmission in a random access request message of the 2-step random access procedure.

With reference to the fifth aspect, in some implementations of the fifth aspect, the transceiver unit is further configured to: when a first condition is satisfied, send the at least one preamble to the network device in the $(n+1)^{th}$ random access procedure, where the first condition includes that the terminal device receives no random access response message from the network device and/or random access contention resolution in the $n^{th}$ random access procedure fails.

According to a sixth aspect, a communication apparatus is provided. In a design, the apparatus may include modules for performing the method/operations/steps/actions described in the second aspect in one-to-one correspondence. The modules may be implemented by hardware circuits, software, or a combination of the hardware circuits and the software. In a design, the apparatus includes: a transceiver unit, configured to send a plurality of repetitions of a preamble to a network device in an $n^{th}$ random access procedure, where the preamble is used to request random access; and a processing unit, configured to: when spatial domain filtering parameters used for the plurality of repetitions in an $(n+1)^{th}$ random access procedure are different from spatial domain filtering parameters used for the plurality of repetitions in the $n^{th}$ random access procedure, a count value of a first preamble power ramping counter in the $(n+1)^{th}$ random access procedure is the same as a count value of the first preamble power ramping counter in the $n^{th}$ random access procedure, where the first preamble power ramping counter is configured to determine a transmit power of at least one of the plurality of repetitions, and m is a positive integer. The transceiver unit is further configured to send the plurality of repetitions of the preamble to the network device in the $(n+1)^{th}$ random access procedure.

With reference to the sixth aspect, in some implementations of the sixth aspect, the processing unit is specifically configured to determine that a second spatial domain filtering parameter set is different from a first spatial domain filtering parameter set, where the first spatial domain filtering parameter set is a set of the spatial domain filtering parameters used for the plurality of repetitions in the $n^{th}$ random access procedure, and the second spatial domain filtering parameter set is a set of the spatial domain filtering parameters used for the plurality of repetitions in the $(n+1)^{th}$ random access procedure.

With reference to the sixth aspect, in some implementations of the sixth aspect, the processing unit is specifically configured to determine that a spatial domain filtering parameter used for an $m^{th}$ repetition in the plurality of repetitions in the $(n+1)^{th}$ random access procedure is different from a spatial domain filtering parameter used for an $m^{th}$ repetition in the plurality of repetitions in the $n^{th}$ random access procedure, where m is a positive integer. With reference to the sixth aspect, in some implementations of the sixth aspect, the transceiver unit is further configured to: when a first condition is satisfied, send at least one preamble to the network device in the $(n+1)^{th}$ random access procedure, where the first condition includes that the terminal device receives no random access response message from the network device and/or random access contention resolution in the $n^{th}$ random access procedure fails.

According to a seventh aspect, a communication apparatus is provided. In a design, the apparatus may include modules for performing the method/operations/steps/actions described in the third aspect in one-to-one correspondence. The modules may be implemented by hardware circuits, software, or a combination of the hardware circuits and the software.

According to an eighth aspect, a communication apparatus is provided, including a processor. The processor may implement the method according to any one of the first aspect or the second aspect and the possible implementations of the first aspect or the second aspect. Optionally, the communication apparatus further includes a memory. The processor is coupled to the memory, and may be configured to execute instructions in the memory, to implement the method according to any one of the first aspect or the second aspect and the possible implementations of the first aspect or the second aspect. Optionally, the communication apparatus further includes a communication interface, and the processor is coupled to the communication interface. In embodiments of this application, the communication interface may be a transceiver, a pin, a circuit, a bus, a module, or another type of communication interface. This is not limited.

In an implementation, the communication apparatus is a terminal device. When the communication apparatus is the terminal device, the communication interface may be a transceiver or an input/output interface.

In another implementation, the communication apparatus is a chip configured in the terminal device. When the communication apparatus is the chip configured in the terminal device, the communication interface may be an input/output interface.

Optionally, the transceiver may be a transceiver circuit. Optionally, the input/output interface may be an input/output circuit.

According to a ninth aspect, a communication apparatus is provided, including a processor. The processor may implement the method according to any one of the third aspect or the fourth aspect and the possible implementations of the second aspect or the fourth aspect. Optionally, the communication apparatus further includes a memory. The processor is coupled to the memory, and may be configured to execute instructions in the memory, to implement the method according to any one of the second aspect or the fourth aspect and the possible implementations of the second aspect or the fourth aspect. Optionally, the communication apparatus further includes a communication interface, and the processor is coupled to the communication interface.

In an implementation, the communication apparatus is a network device. When the communication apparatus is the network device, the communication interface may be a transceiver or an input/output interface.

In another implementation, the communication apparatus is a chip configured in the network device. When the communication apparatus is the chip configured in the first network device, the communication interface may be an input/output interface.

Optionally, the transceiver may be a transceiver circuit. Optionally, the input/output interface may be an input/output circuit.

According to a tenth aspect, a processor is provided, including an input circuit, an output circuit, and a processing circuit. The processing circuit is configured to receive a signal through the input circuit, and transmit a signal through the output circuit, so that the processor performs the method according to any one of the first aspect to the fourth aspect and the possible implementations of the first aspect to the fourth aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal that is received by the input circuit may be received and input by, for example, but not limited to, a receiver, a signal that is output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eleventh aspect, a computer program product is provided. The computer program product includes a computer program (which may also be referred to as code or instructions). When the computer program is run, a computer is enabled to perform the method according to any one of the first aspect to the fourth aspect and the possible implementations of the first aspect to the fourth aspect.

According to a twelfth aspect, a computer-readable storage medium is provided. The computer-readable storage medium stores a computer program (which may also be referred to as code or instructions). When the computer program is run on a computer, the computer is enabled to perform the method according to any one of the first aspect to the fourth aspect and the possible implementations of the first aspect to the fourth aspect.

According to a thirteenth aspect, a communication system is provided, including the foregoing at least one terminal device and at least one network device.

BRIEF DESCRIPTION OF DRAWINGS

FIG. 1 is a diagram of a communication system according to an embodiment of this application;
FIG. 2 is a schematic flowchart of a 4-step random access procedure according to an embodiment of this application;
FIG. 3 is a schematic flowchart of a 2-step random access procedure according to an embodiment of this application;
FIG. 4 is a schematic flowchart of a random access method according to an embodiment of this application;
FIG. 5 is a diagram of a PRACH resource according to an embodiment of this application;
FIG. 6 is a diagram of a PRACH resource for repeatedly transmitting a preamble according to an embodiment of this application;
FIG. 7 is a diagram of canceling sending of a part of a preamble according to an embodiment of this application;
FIG. 8 is another schematic flowchart of a random access method according to an embodiment of this application;
FIG. 9 is a diagram of spatial domain filtering parameters used in two random access procedures according to an embodiment of this application;
FIG. 10 to FIG. 12 are diagrams of a correspondence between a preamble repetition and a spatial domain filtering parameter according to an embodiment of this application;
FIG. 13 is a schematic block diagram of a communication apparatus according to an embodiment of this application; and
FIG. 14 is a diagram of a structure of a communication apparatus according to an embodiment of this application.

DESCRIPTION OF EMBODIMENTS

The following describes technical solutions of this application with reference to accompanying drawings.

In this application, "at least one (item)" may be also described as "one (item) or more (items)", and "a plurality of (items)" may be two (items), three (items), four (items), or more (items). This is not limited. "/" may represent an "or" relationship between associated objects. For example, A/B may represent A or B. In addition, "and/or" may indicate that there are three relationships between associated objects. For example, A and/or B may represent the following three cases: Only A exists, both A and B exist, and only B exists, where A and B may be singular or plural. For ease of description of the technical solutions of this application, a word such as "first", "second", "A", or "B" may be used to distinguish between technical features with a same or similar function. A word like "first", "second", "A", or "B" does not limit a quantity and an execution sequence. In addition, the word like "first", "second", "A", or "B" does not limit a definite difference. A word like "example" or "for example" is used to represent an example, an evidence, or a description. Any design solution described as "example" or "for example" should not be explained as being more preferred or having more advantages than another design solution. The word like "example" or "for example" is intended to present a related concept in a specific manner for ease of understanding.

The technical solutions in embodiments of this application may be applied to various communication systems, for example, a long term evolution (long term evolution, LTE) system, a 5G system, a new radio (new radio, NR) system, and a future communication system, such as a 6th generation mobile communication system. These communication systems may provide cellular coverage by using a non-terrestrial network (non-terrestrial network, NTN) technology. This is not limited in this application.

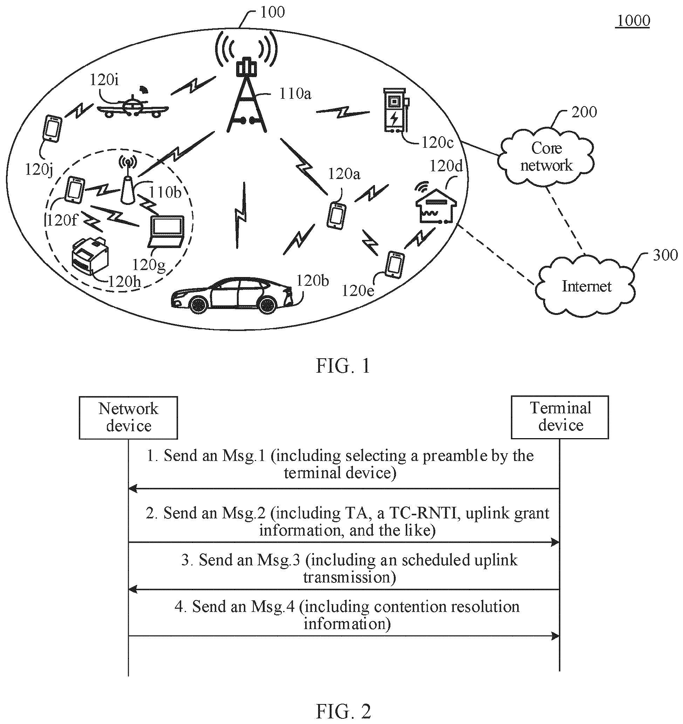

FIG. 1 is a diagram of an architecture of a communication system 1000 to which an embodiment of this application is applied. As shown in the figure, the communication system includes a radio access network 100 and a core network 200. Optionally, the communication system 1000 may further include the internet 300. The radio access network 100 may include at least one radio access network device (for example, 110a and 110b in the figure), and may further include at least one terminal device (for example, 120a to 120j in the figure). The terminal device is connected to the radio access network device in a wireless manner, and the radio access network device is connected to a core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. Terminal devices may be connected to each other in a wired or wireless manner, and radio access network devices may be connected to each other in a wired or wireless manner. FIG. 1 is merely a diagram.

The communication system may further include another network device, for example, may further include a wireless relay device and a wireless backhaul device, which are not shown in the figure.

A network device provided in embodiments of this application may be a device having a wireless transceiver function. For example, the network device may be a radio access network device, and the radio access network device is an access device that is used by the terminal device to access a communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like. Alternatively, the radio access network device may be a module or a unit that completes some functions of a base station, for example, may be a central unit (central unit, CU) or a distributed unit (distributed unit, DU). Herein, the CU completes functions of a radio resource control protocol and a packet data convergence protocol (packet data convergence protocol, PDCP) of the base station, and may further complete functions of a service data adaptation protocol (service data adaptation protocol, SDAP); and the DU completes functions of a radio link control layer and a MAC layer of the base station, and may further complete functions of a part or all of a physical layer. For specific descriptions of the foregoing protocol layers, refer to related technical specifications of the 3rd generation partnership project (3rd generation partnership project, 3GPP). The radio access network device may be a macro base station (for example, 110a in the figure), a micro base station or an indoor station (for example, 110b in the figure), a relay node, a donor node, or the like. A specific technology and a specific device form that are used by the network device are not limited in embodiments of this application. For ease of description, the following provides descriptions by using an example in which the base station serves as the network device.

The terminal device provided in embodiments of this application may also be referred to as a terminal, and includes but is not limited to user equipment (user equipment, UE), a mobile station, a mobile terminal, or the like. The terminal device may be widely used in various scenarios for communication. For example, the scenario includes but is not limited to at least one of the following scenarios: enhanced mobile broadband (enhanced mobile broadband, eMBB), ultra-reliable low-latency communication (ultra-reliable low-latency communication, URLLC), massive machine-type communications (massive machine-type communications, mMTC), device-to-device (device-to-device, D2D) communication, vehicle to everything (vehicle to everything, V2X) communication, machine-type communication (machine-type communication, MTC), an internet of things (internet of things, IoT), virtual reality, augmented reality, industrial control, self-driving, telemedicine, a smart grid, smart furniture, smart office, smart wearable, smart transportation, a smart city, or the like. The terminal device may be a mobile phone (for example, a mobile phone 120a, 120d, or 120f in FIG. 1), a tablet computer, a computer (for example, a computer 120g in FIG. 1) having a wireless transceiver function, a wearable device, a vehicle (for example, 120b in FIG. 1), an uncrewed aerial vehicle, a helicopter, an airplane (for example, 120c in FIG. 1), a ship, a robot, a mechanical arm, a smart home device (for example, a printer 120e in FIG. 1), or the like. A specific technology and a specific device form that are used by the terminal device are not limited in this application.

The base station and/or the terminal device may be at fixed locations or are/is movable. The base station and/or the terminal device may be deployed on the land, including an indoor or outdoor scenario, and a handheld or vehicle-mounted scenario; or may be deployed on the water; or may be deployed on an airplane, a balloon, and an artificial satellite in the air. An environment/a scenario in which the base station and the terminal device are located is not limited in this application.

The following describes technologies and terms in embodiments of this application.

1. Cell search

A network device broadcasts a synchronization signal and physical broadcast channel block (synchronization signal and physical broadcast channel block, SSB), and a terminal device detects, through cell search, the SSB that is broadcast by the network device, and may establish a communication connection to the network device by using the detected SSB. Specifically, the terminal device reads, by detecting the SSB, a master information block (master information block, MIB) carried on a physical broadcast channel (physical broadcast channel, PBCH) in the SSB. The terminal device may obtain a system information block (system information block, SIB) 1 based on the MIB. The SIB 1 includes physical random access channel (physical random access channel, PRACH) configuration information, and the PRACH configuration information in the SIB 1 configures configuration information of a PRACH transmission occasion (PRACH occasion, RO) and a preamble (preamble). The RO is a time-frequency resource used to carry the preamble. The terminal device may initiate a random access procedure based on the configuration information.

2. 4-step (4-step) random access procedure

FIG. 2 is a schematic flowchart of a contention-based 4-step random access procedure. As shown in FIG. 2, a terminal device may select, based on PRACH configuration information in a SIB 1, an RO and a preamble that are used for random access, and send a random access message (message, Msg.) 1 to a network device. Specifically, a PRACH resource associated with an SSB is configured in the SIB 1, and the PRACH resource includes an RO and a preamble. The terminal device may select an RO associated with an SSB with relatively good signal quality, and then select a preamble to send the Msg.1 to the network device. The Msg.1 may also be referred to as a random access request message. The Msg.1 includes the preamble carried on the RO. The preamble is used by the network device to detect the Msg.1, and the RO is used by the network device to calculate a random access radio network temporary identifier (RA-radio network temporary identifier, RA-RNTI) based on time and frequency of the RO. If the network device correctly receives the Msg.1 of the terminal device, the network device sends a random access message 2 (Msg.2) to the terminal device. The Msg.2 may also be referred to as a random access response message, and the Msg.2 is scrambled by using the RA-RNTI. The network device may determine, based on the RO and the preamble, that the terminal device selects the SSB, and the network device may send the Msg.2 to the terminal device by using a spatial domain filtering parameter used for the SSB. The Msg.2 may include timing advance (timing advance, TA) information used for uplink time synchronization adjustment, a temporary cell radio network temporary identifier (temporary cell-RNTI, TC-RNTI), uplink grant (UL grant) information for sending a random access message 3 (Msg.3) by the terminal device, and the like. The terminal device may also calculate an RA-RNTI based on the time and the frequency of the RO, and after sending the Msg. 1, the terminal device detects the Msg.2 from the network device by using the RA-RNTI. After receiving the Msg.2, the terminal device may send the Msg.3 to the network device based on the uplink grant information in the Msg.2, where the Msg.3 includes identity information of the terminal device, radio resource control (radio resource control, RRC) connection establishment information, and the like. After successfully receiving the Msg.3 from the terminal device, the network device may send an Msg.4 to the terminal device, where the Msg.4 is used for contention resolution. The network device may notify, by using the Msg.4, the terminal device that the random access procedure is completed. Otherwise, if the terminal device does not detect the Msg.4, it is considered that the random access procedure fails. The contention-based random access procedure is described above with reference to FIG. 2. The contention-based random access procedure may be used in an initial access procedure of the terminal device, or may be used in an RRC re-establishment procedure, a handover procedure, or the like. A non-contention-based random access procedure includes the first two steps in the foregoing contention-based 4-step random access procedure. The network device configures a dedicated PRACH resource in the non-contention-based random access procedure for the terminal device. The terminal device sends the Msg.1 by using the dedicated PRACH resource of the terminal device. After receiving the Msg. 1, the network device sends the Msg.2 to the terminal device. The non-contention-based random access procedure may be used by the terminal device to request system information, beam failure recovery, and the like as required.

3. 2-step (2-step) random access procedure

With an increase of application scenarios, for example, non-terrestrial networks (non-terrestrial network, NTN) such as satellite communication, there are high round trip time (round trip time, RTT) (for example, up to 600 ms for synchronous satellites) and propagation delay differences (for example, up to 16 ms for synchronous satellites). To reduce a quantity of interactions between a terminal device and a network device during connection establishment and connection resume, and reduce a network access delay of the terminal device, a 2-step random access procedure is proposed in a mobile communication system.

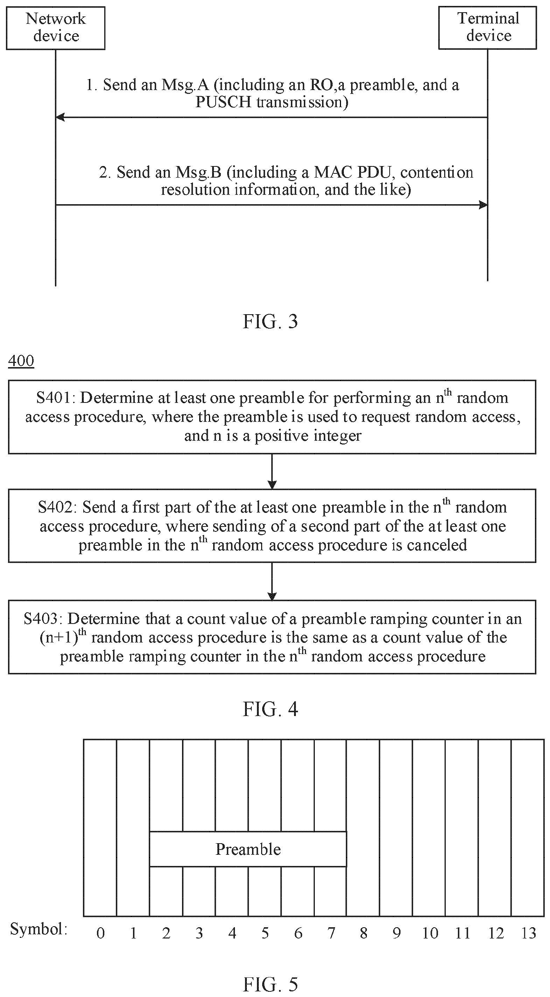

FIG. 3 is a schematic flowchart of a 2-step random access procedure. In the 2-step random access procedure, the terminal device sends a random access message A (Msg.A) to the network device, and the terminal device receives a random access message B (Msg.B) from the network device. The Msg.A may be referred to as a random access request message in the 2-step random access procedure. The Msg.A includes at least a preamble carried on an RO, and the Msg.A may further include a PUSCH transmission. The PUSCH transmission is equivalent to an Msg.3 in a 4-step random access procedure, and includes identity information of the terminal device, identity information of the terminal device, RRC connection establishment information, and the like. The terminal device may determine the RO resource and the preamble based on a SIB 1, which is the same as that in the 4-step random access procedure. For the PUSCH transmission in the Msg.A, a protocol specifies that the network device configures a transmission occasion of the PUSCH transmission by using system information. The Msg.B may be referred to as a random access response message in the 2-step random access procedure. The Msg.B includes a medium access control (medium access control, MAC) protocol data unit (protocol data unit, PDU) used for a random access response and contention resolution information. In the 2-step random access procedure, two steps in which the terminal device sends the random access message A (Msg.A) to the network device and the network device sends the random access message B (Msg.B) to the terminal device are performed to complete a random access procedure of the terminal device. After successfully receiving the Msg.A, the network device may send the Msg.B to the terminal device, to notify the terminal device that the random access procedure is completed. Alternatively, if the network device detects the random access preamble in the Msg.A, but fails to obtain information in the Msg.3, the network device may send the Msg.B to the terminal device to indicate the terminal device to fall back to the 4-step random access procedure.

In a non-contention-based 2-step random access procedure, the terminal device may send the Msg.A by using a dedicated resource of the terminal device that is configured by the network device for the terminal device in the non-contention-based random access procedure. After receiving the Msg.A, the network device sends the Msg.B to the terminal device.

If the terminal device fails to perform one random access procedure, the terminal device may perform a random access procedure again. The network device may configure a maximum preamble transmission quantity for the terminal device by using a preamble transmission maximum quantity configuration parameter. In the 4-step random access procedure, the preamble transmission maximum quantity configuration parameter may be preambleTransMax, and the maximum preamble transmission quantity configured by the network device may be one of 3, 4, 5, 6, 7, 8, 10, 20, 50, 100, and 200. In the 2-step random access procedure, the preamble transmission maximum quantity configuration parameter may be msgA-TransMax, and the maximum preamble transmission quantity configured by the network device may be one of 1, 2, 4, 6, 8, 10, 20, 50, 100, and 200. After the terminal device initiates one random access procedure, a quantity of random access procedures cannot exceed the maximum preamble transmission quantity configured by the network device.

4. Beamforming technology and spatial domain filtering parameter

The beamforming technology means that a radiation signal radiated by a signal by using an antenna array is directional by adjusting an amplitude and/or a phase of the signal, to implement a higher antenna array gain. A main lobe of a radiation pattern of an antenna array may be referred to as a beam.

The amplitude and/or the phase of the signal are/is adjusted after the signal is filtered by a spatial domain transmission filter (spatial domain transmission filter). Different spatial domain transmission filters can implement beams in different directions by using different spatial domain filtering parameters. In embodiments of this application, the spatial domain filtering parameter may be replaced with a beam, or the spatial domain filtering parameter may be replaced with a spatial domain transmission filter. The spatial domain transmission filter may also be referred to as a spatial filter (spatial filter).

Specifically, the beamforming technology includes an analog beamforming technology, a digital beamforming technology, and a hybrid digital analog beamforming technology. In the analog beamforming technology, signals may be simultaneously sent by using an antenna array including a plurality of antenna array elements, and each antenna array element corresponds to one phase shifter. A phase of the phase shifter corresponding to each antenna array element is adjusted, so that a radiation signal radiated by a signal by using the antenna array is directional. Therefore, in the analog beamforming technology, a function of the spatial domain transmission filter may be implemented by using a plurality of phase shifters corresponding to the plurality of array elements in the antenna array. The digital beamforming technology has a plurality of digital processing channels, and a phase (or an amplitude and a phase) of a signal is adjusted in digital domain through each digital processing channel, so that a radiation signal radiated by the signal by using an antenna is directional. Therefore, in the digital beamforming technology, a function of the spatial domain transmission filter may be implemented by using the plurality of digital processing channels. The hybrid beamforming technology is a combination of the analog beamforming technology and the digital beamforming technology, and has a plurality of digital processing channels and a plurality of analog phase shifters. Therefore, in the hybrid beamforming technology, a function of the spatial domain transmission filter may be implemented by using a plurality of phase shifters corresponding to a plurality of array elements in an antenna array and a plurality of digital processing channels. However, this application is not limited thereto, and the spatial domain transmission filter may alternatively be implemented by using another technology.

5. Transmit power of a preamble

A terminal device may determine a transmit power of a preamble based on a target received power of the preamble, a path loss, and a maximum transmit power in a current random access procedure. For example, the transmit power of the preamble satisfies the following formula:

$$P_{PRACH,b,f,c}(i) = \min\{P_{CMAX,f,c}(i), P_{PRACH\ target,f,c} + PL_{b,f,c}\}\ dBm$$

Herein, $i$ represents an identifier of an RO, $b$ represents an identifier of a bandwidth part (bandwidth part, BWP), $f$ is a carrier identifier, and $c$ is an identifier of a serving cell. In other words, $P_{PRACH,b,f,c}(i)$ is a transmit power of the preamble sent by the terminal device on an RO $i$ on a BWP whose identifier is $b$, and the BWP whose identifier is $b$ is a BWP on a carrier $f$ of a serving cell whose cell identifier is c. In addition, $P_{CMAX,f,c}(i)$ is a maximum output power of the preamble on the carrier $f$ of the serving cell whose identifier is c, $PL_{b,f,c}$ is a path loss (path loss) on the BWP whose identifier is $b$, and

$P_{PRACH\,target,f,c}$ is the target received power of the preamble. The target received power is a received power expected by the terminal device for a network device for receiving the preamble. In the foregoing formula, the terminal device may determine, based on the target received power and the path loss, the transmit power for sending the preamble by the terminal device, so that the received power expected for receiving the preamble by the network device can reach $P_{PRACH\,target,f,c}$, and the transmit power of the preamble that is determined by the terminal device cannot be greater than the maximum transmit power on the carrier.

The network device may configure, for the terminal device, the target received power of the preamble sent by the terminal device in an initial random access procedure. In addition, after one random access procedure fails, the terminal device may initiate a random access procedure again on a same carrier of a same cell by using a same preamble. When initiating the random access procedure again, the terminal device may increase the target received power of the preamble by using a power ramping mechanism, to enhance coverage of the preamble and increase a random access success probability. The network device configures a power ramping step for the terminal device, and the terminal device can increase the target received power of the preamble by only one power ramping step each time, to reduce interference to another communication device that is caused by an excessively large power increase. Specifically, the terminal device may determine, based on a count value of a preamble power ramping counter, a quantity of power ramping steps by which the target received power increases, to determine the target received power of the preamble in the current random access procedure, and further determine the transmit power of the preamble.

However, the terminal device may cancel sending of a part of preambles due to a conflict between a data channel resource scheduled by the network device and a PRACH resource, or another reason. In this case, a failure of a random access procedure may not be caused by a power. Therefore, in embodiments of this application, when the terminal device cancels sending of a part of preambles in a random access procedure, the terminal device does not increase a target received power of a preamble sent next time, so that unnecessary power consumption and interference to another communication device are reduced.

FIG. 4 is a schematic flowchart of a random access method 400 according to an embodiment of this application. The random access method 400 shown in FIG. 4 may be performed by a terminal device or an apparatus (for example, a chip or a chip system) configured in the terminal device. The following uses an example in which the terminal device performs the method 400 for description. The method includes but is not limited to the following steps.

S401: The terminal device determines at least one preamble for performing an $n^{th}$ random access procedure, where the preamble is used to request random access.

Herein, n may be equal to 1, that is, the $n^{th}$ random access procedure is a $1^{st}$ random access procedure; or n may be greater than 1 and less than N-1, that is, after the first n-1 random access procedures fail, the terminal device may initiate again a random access procedure that is the $n^{th}$ random access procedure by using a same preamble. N is a maximum quantity, configured by a network device, of random access procedures initiated by the terminal device by using the same preamble.

Preambles for performing n random access procedures by the terminal device are the same. That preambles are the same means that sequences of the preambles are the same, that is, preamble indexes (preamble index) are the same, and a same index identifies a same preamble sequence. In other words, when n is greater than 1, a sequence of the preamble for performing the $n^{th}$ random access procedure by the terminal device is the same as sequences of preambles for performing the first n-1 random access procedures. It should be noted that the n random access procedures in this embodiment of this application are random access procedures performed by the terminal device on a same carrier of a same cell by using the same preamble.

The terminal device may access a network through a random access procedure to establish an RRC connection when being in a radio resource control (radio resource control, RRC) idle (idle) state. Alternatively, the terminal device encounters a radio link failure when being in an RRC connected state, and re-establishes an RRC connection through a random access procedure. Alternatively, when being in an RRC connected state, the terminal device performs uplink synchronization calibration through a random access procedure. Alternatively, the terminal device enters an RRC connected state in an RRC inactive (inactive) state through a random access procedure. An application scenario in which the terminal device initiates a random access procedure is not limited in this application.

Optionally, the terminal device receives first configuration information, where the first configuration information is used to configure a PRACH; and the terminal device may determine a preamble sequence, a PRACH time-frequency resource location, and the like based on the first configuration information.

For example, the first configuration information may be carried in a system information block (system information block, SIB) or an RRC message.

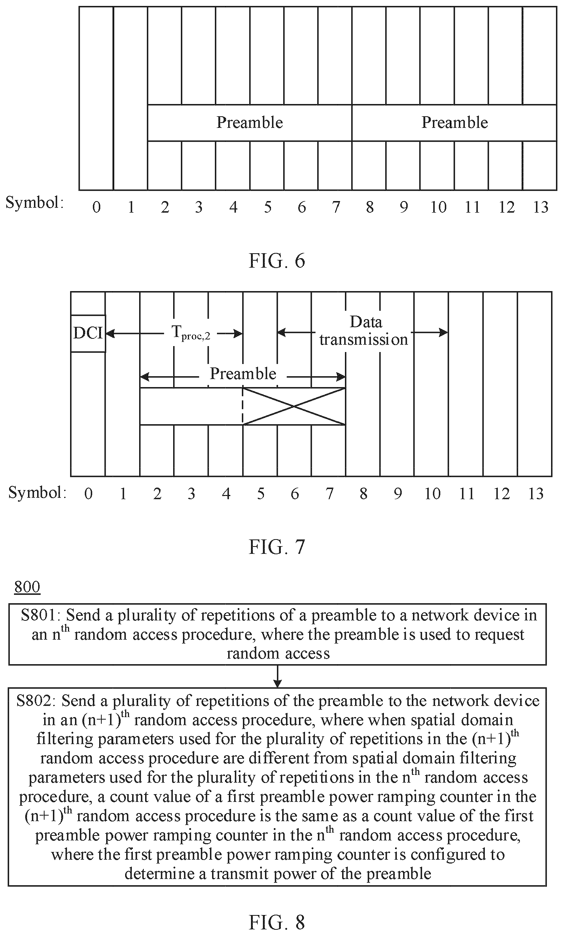

The terminal device may repeatedly or not repeatedly transmit a preamble in a random access procedure. If the terminal device does not repeatedly transmit a preamble in a random access procedure, the at least one preamble determined by the terminal device is one preamble. For example, as shown in FIG. 5, the terminal device determines to send one preamble in the $n^{th}$ random access procedure on a symbol 2 to a symbol 7, where a PRACH time domain resource includes the symbol 2 to the symbol 7. If the terminal device repeatedly transmits a preamble in a random access procedure, the at least one preamble includes a plurality of repetitions of one preamble, that is, the at least one preamble includes a plurality of same preambles. For example, as shown in FIG. 6, the terminal device transmits two repetitions of a preamble in a random access procedure. The terminal device determines to send one repetition in the $n^{th}$ random access procedure on a symbol 2 to a symbol 7, and sends the other repetition in the $n^{th}$ random access procedure on a symbol 8 to a symbol 13, where a PRACH time domain resource includes the symbol 2 to the symbol 13. It should be understood that, during specific implementation, a plurality of repetitions of a preamble may occupy a plurality of symbols in one slot, or may occupy a plurality of symbols in a plurality of slots. During specific implementation, the terminal device may determine a PRACH time-frequency resource location based on a configuration of the network device. This is not limited in this application.

Transmission manners of the preambles for performing the n random access procedures by the terminal device are the same, that is, the terminal device does not repeatedly transmit a preamble in each random access procedure or repeatedly transmits a preamble in each random access procedure.

S402: The terminal device sends a first part of the at least one preamble to the network device in the $n^{th}$ random access procedure, where sending of a second part of the at least one preamble in the $n^{th}$ random access procedure is canceled, and n is a positive integer.

In an implementation, the second part includes a part of one preamble in the at least one preamble in the $n^{th}$ random access procedure.

For example, the terminal device does not repeatedly transmit a preamble in a random access procedure, to be specific, the terminal device sends a first part of one preamble in the $n^{th}$ random access procedure to the network device in S402, where sending of a second part of the preamble is canceled.

For example, as shown in FIG. 7, the terminal device determines to send one preamble in the $n^{th}$ random access procedure on a symbol 2 to a symbol 7. The terminal device performs uplink synchronization calibration through a random access procedure. The terminal device may still receive a downlink signal. For example, if the terminal device receives one piece of downlink control information (downlink control information, DCI) on a symbol 0, the DCI schedules a data transmission on the symbol 6 to a symbol 10, where the data transmission scheduled by the DCI conflicts with the preamble on the symbol 6 and the symbol 7. In this case, the terminal device determines to cancel sending of the preamble. However, specific processing time, for example, $T_{proc,2}$, is required for the terminal device to parse the DCI to cancel sending of the preamble. Therefore, the terminal device has no time to cancel a first part of the preamble on the symbol 2 to the symbol 4. In this case, the terminal device sends the first part of the preamble on the symbol 2 to the symbol 4. After the duration $T_{proc,2}$ of receiving the DCI, the terminal device cancels sending of a second part of the preamble on the symbol 5, the symbol 6, and the symbol 7.

It should be noted that, in this example, the network device schedules a data transmission, so that the terminal device cancels sending of the second part of the preamble. The terminal device may alternatively cancel sending of the second part of the preamble due to another reason. This is not limited in this application.

Optionally, if the $n^{th}$ random access procedure is a 2-step random access procedure, in this implementation, the terminal device cancels a PUSCH transmission in a random access request message.

In the 2-step random access procedure, the random access request message (Msg.A) includes a preamble and a PUSCH. However, when the preamble in the $n^{th}$ random access procedure is not completely sent, the network device cannot detect the preamble from the terminal device, and the network device cannot learn that the terminal device transmits a PUSCH associated with the preamble. Therefore, the terminal device cancels sending of the PUSCH in the random access request message, so that unnecessary power consumption of the terminal device and a waste of communication resources can be reduced.

In another implementation, the terminal device repeatedly transmits a preamble in a random access procedure. In this case, the at least one preamble includes a plurality of repetitions of one preamble, and the second part includes at least a part or all of one repetition in the plurality of repetitions.

For example, the terminal device determines to send two repetitions of the preamble in the $n^{th}$ random access procedure: repetition 1 and repetition 2. In an example, the terminal device sends all of the repetition 1 and a part of the repetition 2, and cancels sending of the other part of the repetition 2. In this case, the second part includes a part of one repetition (namely, the repetition 2). In another example, the terminal device sends all of the repetition 1, and cancels sending of all of the repetition 2. In this case, the second part includes all of one repetition (namely, the repetition 2). In still another example, the terminal device sends a part of the repetition 1, and cancels sending of the other part of the repetition 1 and all of the repetition 2. In this case, the second part includes a part of one repetition (namely, the repetition 1) and all of the other repetition (namely, the repetition 2).

Optionally, if the $n^{th}$ random access procedure is a 2-step random access procedure, in this implementation, if the first part of the at least one preamble does not include all of one repetition, the terminal device cancels the PUSCH transmission in the random access request procedure; or if the first part of the at least one preamble includes at least one repetition, the terminal device sends the PUSCH transmission in the random access request message.

In other words, if the terminal device sends at least one repetition of a preamble, the network device may detect the preamble and therefore receive a PUSCH transmission associated with the preamble. Therefore, when sending all of the at least one repetition, the terminal device sends the PUSCH transmission in the random access request message to the network device. If a first part of a plurality of repetitions sent by the terminal device does not include one complete repetition, the network device cannot detect the preamble. Therefore, the terminal device cancels the PUSCH transmission in the random access request message, so that power consumption and a waste of communication resources can be reduced.

S403: The terminal device determines that a count value of a preamble power ramping counter in an $(n+1)^{th}$ random access procedure is the same as a count value of the preamble power ramping counter in the $n^{th}$ random access procedure.

The preamble power ramping counter is configured to determine a transmit power of a preamble in a current random access procedure. For example, the preamble power ramping counter may be denoted as a PREAMBLE_POWER_RAMPING_COUNTER.

Because the terminal device does not completely send the random access request message of the $n^{th}$ random access procedure, the $n^{th}$ random access procedure of the terminal device may fail because of cancel of sending of the second part of the at least one preamble instead of a transmit power of the preamble. Therefore, when canceling sending of the second part of the at least one preamble in the $n^{th}$ random access procedure, the terminal device determines that a preamble power is not increased in the $(n+1)^{th}$ random access procedure, that is, in the $(n+1)^{th}$ random access procedure, the preamble power ramping counter does not perform accumulative counting, and the count value of the preamble power ramping counter in the $n^{th}$ random access procedure is still used. In other words, a target received power of the preamble determined by the terminal device based on the power ramping counter in the $n^{th}$ random access procedure is the same as that determined by the terminal device based on the power ramping counter in the $(n+1)^{th}$ random access procedure, to reduce an unnecessary preamble power increase, so that unnecessary power consumption and interference to another communication device are reduced.

The terminal device determines, depending on whether the preamble power ramping counter performs accumulative counting, that a count value of the power ramping counter in one random access procedure is the same as a count value of the power ramping counter in the $n^{th}$ random access procedure, determines a target received power of a preamble based on the count value, and then determines a transmit power of the preamble based on the target received power and a path loss, where the transmit power for sending the preamble by the terminal device does not exceed a maximum transmit power.

Optionally, a count value of a preamble transmission counter in the $(n+1)^{th}$ random access procedure is the same as a count value of the preamble transmission counter in the $n^{th}$ random access procedure.

For example, the preamble transmission counter may be denoted as PREAMBLE_TRANSMISSION_COUNTER.

Because the terminal device does not completely send the random access request message of the $n^{th}$ random access procedure, the terminal device determines that the preamble transmission counter does not perform accumulative counting in the $(n+1)^{th}$ random access procedure of the terminal device, to reduce a case in which a quantity of transmissions and a random access success probability are reduced because a preamble is not completely sent.

Optionally, when a first condition is satisfied, the terminal device sends the at least one preamble to the network device in the $(n+1)^{th}$ random access procedure, where the first condition includes that the terminal device receives no random access response message from the network device and/or random access contention resolution in the $n^{th}$ random access procedure fails.

For example, after sending the first part of the at least one preamble in the $n^{th}$ random access procedure, the terminal device does not receive a random access response message from the network device, and the terminal device determines that the $n^{th}$ random access procedure fails. Alternatively, the terminal device receives a random access response message from the network device, but random access contention resolution in the $n^{th}$ random access procedure of the terminal device fails. The terminal device determines that the $n^{th}$ random access procedure fails. The terminal device sends the at least one preamble to the network device in the $(n+1)^{th}$ random access procedure. The count value of the preamble power ramping counter in the $(n+1)^{th}$ random access procedure is the same as the count value of the preamble power ramping counter in the $n^{th}$ random access procedure. Optionally, the count value of the preamble transmission counter in the $(n+1)^{th}$ random access procedure is the same as the count value of the preamble transmission counter in the $n^{th}$ random access procedure.

In the $(n+1)^{th}$ random access procedure, the terminal device determines that the preamble power ramping counter does not perform accumulative counting, and the count value is the same as the count value in the $n^{th}$ random access procedure. Therefore, the target received power of the preamble that is determined by the terminal device based on the preamble power ramping counter in the $(n+1)^{th}$ random access procedure is also the same as the target received power of the preamble that is determined in the $n^{th}$ random access procedure. The terminal device determines the transmit power of the preamble based on the target received power and the path loss, and if the transmit power of the preamble is less than or equal to the maximum transmit power, the terminal device sends the at least one preamble in the $(n+1)^{th}$

random access procedure by using the transmit power.

Optionally, when a second condition is satisfied, if the terminal device sends the first part of the at least one preamble in the $n^{th}$ random access procedure, and cancels sending of the second part of the at least one preamble, the terminal device determines that the count value of the preamble power ramping counter in the $(n+1)^{th}$ random access procedure is the same as the count value of the preamble power ramping counter in the $n^{th}$ random access procedure. If the terminal device sends all of the at least one preamble in the $n^{th}$ random access procedure, the terminal device determines that the preamble power ramping counter performs accumulative counting in the $(n+1)^{th}$ random access procedure, that is, the count value of the preamble power ramping counter in the $(n+1)^{th}$ random access procedure is incremented by 1 based on the count value in the $n^{th}$ random access procedure.

The second condition includes one or more of the following a to c:

a: A spatial domain filtering parameter used for the at least one preamble in the $n^{th}$ random access procedure is the same as a spatial domain filtering parameter used for the at least one preamble in the $(n+1)^{th}$ random access procedure. In other words, a beam used by the terminal device to send the at least one preamble in the $n^{th}$ random access procedure is the same as a beam used by the terminal device to send the at least one preamble in the $(n+1)^{th}$ random access procedure, or a beam does not change.

b. An SSB associated with a PRACH resource used in the $n^{th}$ random access procedure is the same as an SSB associated with a random access channel resource used in the $(n+1)^{th}$ random access procedure. In other words, the terminal device selects, in the $n^{th}$ random access procedure and the $(n+1)^{th}$ random access procedure, PRACH resources associated with a same SSB to send a random access request message.

For example, that SSBs are the same specifically means that an identifier of the SSB associated with the random access channel resource used in the $n^{th}$ random access procedure is the same as that of the SSB associated with the random access channel resource used in the $(n+1)^{th}$ random access procedure.

c: A reference signal associated with the PRACH resource used in the $n^{th}$ random access procedure is the same as a reference signal associated with the PRACH resource used in the $(n+1)^{th}$ random access procedure.

For example, that reference signals are the same means that a reference signal resource identifier of the reference signal associated with the random access channel resource used in the $n^{th}$ random access procedure is the same as that of the reference signal associated with the random access channel resource used in the $(n+1)^{th}$ random access procedure.

A random access channel resource may be associated with a reference signal. The terminal device may select a PRACH resource associated with a reference signal to initiate a random access procedure. If the at least one preamble of the terminal device in the $n^{th}$ random access procedure is a preamble associated with one reference signal, PRACH resources selected by the terminal device in the $n^{th}$ random access procedure and the $(n+1)^{th}$ random access procedure are PRACH resources associated with a same reference signal.

By way of example, and not limitation, the reference signal may be a demodulation reference signal (demodulation reference signal, DMRS), a channel state information reference signal (channel state information-reference signal, CSI-RS), a phase tracking reference signal (phase tracking reference signal, PTRS), or a tracking reference signal (tracking reference signal, TRS).

When a spatial domain filtering parameter used by the terminal device to send a preamble in one random access procedure is different from a spatial domain filtering parameter used by the terminal device to send the preamble in a previous random access procedure, this embodiment of this application proposes that the terminal device does not perform accumulative counting on the preamble power ramping counter, and a target received power of the preamble is not increased. The following describes the random access method provided in this application with reference to FIG. 8.

FIG. 8 is another schematic flowchart of a random access method according to an embodiment of this application. The random access method 800 shown in FIG. 8 may be performed by a terminal device or an apparatus (for example, a chip or a chip system) configured in the terminal device. The following uses an example in which the terminal device performs the method 800 for description. The method includes but is not limited to the following steps.

S801: The terminal device sends a plurality of repetitions of a preamble to a network device in an $n^{th}$ random access procedure, where the preamble is used to request random access.

If the terminal device repeatedly transmits the preamble in a random access procedure, the terminal device sends the plurality of repetitions of the preamble to the network device in the $n^{th}$ random access procedure, to request network access.

S802: The terminal device sends a plurality of repetitions of the preamble to the network device in an $(n+1)^{th}$ random access procedure, where when spatial domain filtering parameters used for the plurality of repetitions in the $(n+1)^{th}$ random access procedure are different from spatial domain filtering parameters used for the plurality of repetitions in the $n^{th}$ random access procedure, a count value of a first preamble power ramping counter in the $(n+1)^{th}$ random access procedure is the same as a count value of the first preamble power ramping counter in the $n^{th}$ random access procedure.

The terminal device determines that the $n^{th}$ random access procedure fails. If the terminal device determines, when a first condition is satisfied, that the $n^{th}$ random access procedure fails, the terminal device performs the $(n+1)^{th}$ random access procedure, and the terminal device sends the plurality of repetitions of the preamble to the network device in the $(n+1)^{th}$ random access procedure.

Optionally, a synchronization signal and physical broadcast channel block SSB associated with a random access channel resource used in the $n^{th}$ random access procedure is the same as an SSB associated with a random access channel resource used in the $(n+1)^{th}$ random access procedure; and/or a reference signal associated with the random access channel resource used in the $n^{th}$ random access procedure is the same as a reference signal associated with the random access channel resource used in the $(n+1)^{th}$ random access procedure.

In an implementation, that spatial domain filtering parameters used for the plurality of repetitions in the $(n+1)^{th}$ random access procedure are different from spatial domain filtering parameters used for the plurality of repetitions in the $n^{th}$ random access procedure includes: a second spatial domain filtering parameter set is different from a first spatial domain filtering parameter set, where the first spatial domain filtering parameter set is a set of the spatial domain filtering parameters used for the plurality of repetitions in the $n^{th}$ random access procedure, and the second spatial domain filtering parameter set is a set of the spatial domain filtering parameters used for the plurality of repetitions in the $(n+1)^{th}$ random access procedure.

The first preamble power ramping counter is configured to determine a transmit power of each of a plurality of repetitions in a current random access procedure.

In other words, the terminal device maintains one preamble power ramping counter, namely, the first preamble power ramping counter, in the random access procedure.

If the terminal device determines that the second spatial domain filtering parameter set used in the $(n+1)^{th}$ random access procedure is different from the first spatial domain filtering parameter set used in the $n^{th}$ random access procedure, the terminal device does not perform accumulative counting on the first preamble power ramping counter in the $(n+1)^{th}$ random access procedure. The count value of the first preamble power ramping counter in the $(n+1)^{th}$ random access procedure is the same as the count value of the first preamble power ramping counter in the $n^{th}$ random access procedure.

Because the terminal device attempts to send at least one of the plurality of repetitions by using a spatial domain filtering parameter different from that in a previous random access procedure, the spatial domain filtering parameter for the at least one of the plurality of repetitions changes, a count value of the first preamble power ramping counter is not accumulated, and a power of the plurality of repetitions sent by the terminal device in the $(n+1)^{th}$ random access procedure is not increased. A target received power of the plurality of repetitions determined by the terminal device based on a power ramping counter in the $n^{th}$ random access procedure is the same as that of the plurality of repetitions determined by the terminal device based on the power ramping counter in the $(n+1)^{th}$ random access procedure.

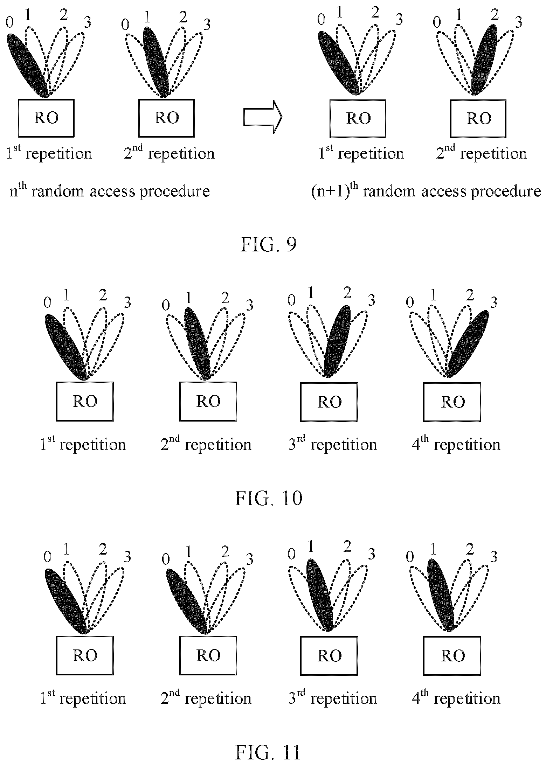

For example, as shown in FIG. 9, the terminal device sends two repetitions of the preamble in each random access procedure. In the $n^{th}$ random access procedure, the terminal device sends the $1^{st}$ repetition of the preamble by using a spatial domain filtering parameter 0 in candidate spatial domain filtering parameters 0 to 3, and sends the $2^{nd}$ repetition of the preamble by using the spatial domain filtering parameter 1. In this case, the first spatial domain filtering parameter set includes the spatial domain filtering parameter 0 and the spatial domain filtering parameter 1. After the $n^{th}$ random access procedure fails, the terminal device determines to send two repetitions of the preamble to the network device in the $(n+1)^{th}$ random access procedure. The terminal device sends the $1^{st}$ repetition of the preamble by using the spatial domain filtering parameter 0, and sends the $2^{nd}$ repetition of the preamble by using the spatial domain filtering parameter 2. In this case, the second spatial domain filtering parameter set includes the spatial domain filtering parameter 0 and the spatial domain filtering parameter 2. Because the second spatial domain filtering parameter is different from the first spatial domain filtering parameter, in the $(n+1)^{th}$ random access procedure, the first preamble power ramping counter does not perform accumulative counting, and the count value is the same as the count value in the $n^{th}$ random access procedure. The terminal device determines a target received power of the two repetitions in the $(n+1)^{th}$ random access procedure based on the count value of the first preamble power counter.

If the terminal device determines that the second spatial domain filtering parameter set used for sending the plurality of repetitions in the $(n+1)^{th}$ random access procedure is the same as the first spatial domain filtering parameter used for sending the plurality of repetitions in the $n^{th}$ random access procedure, the terminal device performs accumulative counting on the first preamble power ramping counter, that is, adds 1 to the count value, and the terminal device determines, based on the first preamble power ramping counter in the $(n+1)^{th}$ random access procedure, that the target received power of the plurality of repetitions is increased by one power ramping step compared with the target received power of the plurality of repetitions in the $n^{th}$ random access procedure.

For example, Table 1 shows a correspondence between a spatial domain filtering parameter for each repetition of the preamble in the $n^{th}$ random access procedure and the $(n+1)^{th}$ random access procedure and whether a target received power is increased. As shown in Table 1, if a used spatial domain filtering parameter set does not change in two random access procedures, for example, the spatial domain filtering parameter 1 is used for two repetitions in each random access procedure, the terminal device determines that the count value of the first preamble power ramping counter in the $(n+1)^{th}$ random access procedure is increased by 1, and determines, based on the first preamble power ramping counter, that the target received power of the two repetitions is increased by one power ramping step. In another example shown in Table 1, if the spatial domain filtering parameter 1 is used for the $1^{st}$ repetition and the spatial domain filtering parameter 2 is used for the $2^{nd}$ repetition in both the $n^{th}$ random access procedure and the $(n+1)^{th}$ random access procedure, that is, both the first spatial domain filtering parameter set and the second spatial domain filtering parameter set include the spatial domain filtering parameter 1 and the spatial domain filtering parameter 2, and the second spatial domain filtering parameter set is the same as the first spatial domain filtering parameter set, the target received power of the two repetitions sent by the terminal device in the $(n+1)^{th}$ random access procedure is increased. Alternatively, if the spatial domain filtering parameter 1 is used for the $1^{st}$ repetition and the spatial domain filtering parameter 2 is used for the $2^{nd}$ repetition in the $n^{th}$ random access procedure, that is, the first spatial domain filtering parameter set includes the spatial domain filtering parameter 1 and the spatial domain filtering parameter 2, and the spatial domain filtering parameter 2 is used for the $1^{st}$ repetition and the spatial domain filtering parameter 1 is used for the $2^{nd}$ repetition in the $(n+1)^{th}$ random access procedure, that is, the second spatial domain filtering parameter set also includes the spatial domain filtering parameter 1 and the spatial domain filtering parameter 2 and is the same as the first spatial domain filtering parameter set, the target received power of the two repetitions sent by the terminal device in the $(n+1)^{th}$ random access procedure is increased.

It is assumed that spatial domain filtering parameters for some repetitions in the two random access procedures change. As shown in Table 1, the spatial domain filtering parameter 1 is used for the two repetitions in the $n^{th}$ random access procedure, that is, the first spatial domain filtering parameter set includes only the spatial domain filtering parameter 1. The terminal device determines that a spatial domain filtering parameter used for one (for example, the $1^{st}$ repetition or the $2^{nd}$ repetition) of the repetitions in the $(n+1)^{th}$ random access procedure is changed to the spatial domain filtering parameter 2, that is, the second spatial domain filtering parameter includes the spatial domain filtering parameter 1 and the spatial domain filtering parameter 2 and is different from the first spatial domain filtering parameter set. In this case, the terminal device determines that the first preamble power ramping counter does not perform accumulative counting in the $(n+1)^{th}$ random access procedure, and determines, based on the first preamble power ramping counter, that the target received power of the two repetitions in the $(n+1)^{th}$ random access procedure is the same as that of the two repetitions in the $n^{th}$ random access procedure.

It is assumed that spatial domain filtering parameters for all repetitions in the two random access procedures change. As shown in Table 1, the spatial domain filtering parameter 1 is used for the two repetitions in the $n^{th}$ random access procedure, and the terminal device determines that the spatial domain filtering parameter 2 is used for the two repetitions in the $(n+1)^{th}$ random access procedure, that is, the first spatial domain filtering parameter set includes only the spatial domain filtering parameter 1, and the second spatial domain filtering parameter set includes only the spatial domain filtering parameter 2 and is different from the first spatial domain filtering parameter set. Alternatively, the spatial domain filtering parameter 1 and the spatial domain filtering parameter 2 are respectively used for the two repetitions in the $n^{th}$ random access procedure, that is, the first spatial domain filtering parameter set includes the spatial domain filtering parameter 1 and the spatial domain filtering parameter 2. However, the spatial domain filtering parameter 3 and the spatial domain filtering parameter 4 are respectively used for the two repetitions in the $(n+1)^{th}$ random access procedure, that is, the second spatial domain filtering parameter set includes the spatial domain filtering parameter 3 and the spatial domain filtering parameter 4 and is different from the first spatial domain filtering parameter set. The terminal device determines that the first preamble power ramping counter does not perform accumulative counting in the $(n+1)^{th}$ random access procedure, and determines, based on the first preamble power ramping counter, that the target received power of the two repetitions does not change.

Table 1

| | $n^{th}$ random access procedure | | $(n+1)^{th}$ random access procedure | | Whether a target received power is increased |
|---|---|---|---|---|---|
| | $1^{st}$ repetition | $2^{nd}$ repetition | $1^{st}$ repetition | $2^{nd}$ repetition | |
| Spatial domain filtering parameters for all repetitions do not change | Spatial domain filtering parameter 1 | | Spatial domain filtering parameter 1 | | Yes |
| | Spatial domain filtering parameter 1 | Spatial domain filtering parameter 2 | Spatial domain filtering parameter 1 | Spatial domain filtering parameter 2 | |

(continued)

| | nth random access procedure | | (n+1)th random access procedure | | Whether a target received power is increased |
|---|---|---|---|---|---|
| | 1st repetition | 2nd repetition | 1st repetition | 2nd repetition | |
| Spatial domain filtering parameters for some repetitions change | Spatial domain filtering parameter 1 | | Spatial domain filtering parameter 1 | Spatial domain filtering parameter 2 | No |
| | Spatial domain filtering parameter 1 | | Spatial domain filtering parameter 2 | Spatial domain filtering parameter 1 | |
| | Spatial domain filtering parameter 1 | Spatial domain filtering parameter 2 | Spatial domain filtering parameter 1 | Spatial domain filtering parameter 3 | |
| | Spatial domain filtering parameter 1 | Spatial domain filtering parameter 2 | Spatial domain filtering parameter 2 | | |
| | Spatial domain filtering parameter 1 | Spatial domain filtering parameter 2 | Spatial domain filtering parameter 1 | | |
| | Spatial domain filtering parameter 1 | Spatial domain filtering parameter 2 | Spatial domain filtering parameter 3 | Spatial domain filtering parameter 2 | |
| Spatial domain filtering parameters for all repetitions change | Spatial domain filtering parameter 1 | | Spatial domain filtering parameter 2 | | No |
| | Spatial domain filtering parameter 1 | Spatial domain filtering parameter 2 | Spatial domain filtering parameter 3 | Spatial domain filtering parameter 4 | |

It should be understood that, to describe the solution provided in this application, Table 1 lists only several cases as an example. In this application, a quantity of repeated transmissions of the preamble by the terminal device and a used spatial domain filtering parameter are not limited in a specific implementation.

In another implementation, that spatial domain filtering parameters used for the plurality of repetitions in the $(n+1)^{th}$ random access procedure are different from spatial domain filtering parameters used for the plurality of repetitions in the $n^{th}$ random access procedure includes: a spatial domain filtering parameter used for an $m^{th}$ repetition in the plurality of repetitions in the $(n+1)^{th}$ random access procedure is different from a spatial domain filtering parameter used for an $m^{th}$ repetition in the plurality of repetitions in the $n^{th}$ random access procedure, where m is a positive integer.

Optionally, the plurality of repetitions are in one-to-one correspondence with a plurality of preamble power ramping counters, where one preamble power ramping counter is configured to determine a transmit power of a corresponding repetition in a current random access procedure. The first preamble power ramping counter corresponds to the $m^{th}$ repetition.

In other words, the first preamble power ramping counter is specifically configured to determine a transmit power of the $m^{th}$ repetition. The terminal device maintains one preamble power ramping counter for each repetition in the random access procedure. If the terminal device determines that a spatial domain filtering parameter used for one repetition (for example, the $m^{th}$ repetition) in the $(n+1)^{th}$ random access procedure is different from a spatial domain filtering parameter used in the $n^{th}$ random access procedure, a count value of the first preamble power ramping counter corresponding to the $m^{th}$ repetition is not accumulatively counted, the count value is the same as a count value in the $n^{th}$ random access procedure, and the target received power of the $m^{th}$ repetition that is determined based on the first preamble power ramping counter does not change in the $(n+1)^{th}$ random access procedure and the $n^{th}$ random access procedure.

Optionally, a $k^{th}$ repetition in the plurality of repetitions corresponds to a second preamble power ramping counter. If the terminal device determines that a spatial domain filtering parameter used for the $k^{th}$ repetition in the $(n+1)^{th}$ random access procedure is the same as a spatial domain filtering parameter used in the $n^{th}$ random access procedure, the terminal device determines that a count value of the second preamble power ramping counter corresponding to the $k^{th}$ repetition in the $(n+1)^{th}$ random access procedure is different from a count value of the second preamble power ramping counter in the $n^{th}$ random access procedure, that is, the count value of the second preamble power ramping counter in the $(n+1)^{th}$ random access procedure is increased by 1 based on the count value in the $n^{th}$ random access procedure, and a target received power of the $k^{th}$ repetition that is determined by the terminal device based on the second preamble power ramping counter is increased by one power ramping step compared with a target received power of the $k^{th}$ repetition in the $n^{th}$ random access procedure. In this case, in the plurality of repetitions in the $(n+1)^{th}$ random access procedure, the target received power of the $m^{th}$ repetition is not increased, and the target received power of the $k^{th}$ repetition is increased.

Optionally, different spatial domain filtering parameters are used for different repetitions in a plurality of repetitions transmitted by the terminal device in one random access procedure; or a same spatial domain filtering parameter is used for at least two of a plurality of repetitions; or a same spatial domain filtering parameter is used for a plurality of repetitions.

For example, different spatial domain filtering parameters are used for different repetitions in a plurality of repetitions transmitted by the terminal device in one random access procedure, that is, the spatial domain filtering parameters are in one-to-one correspondence with the repetitions. As shown in FIG. 10, the terminal device sends four repetitions of one preamble in a random access procedure, and spatial domain filtering parameters used for the four repetitions are spatial domain filtering parameters 0, 1, 2, and 3 in sequence.

For another example, a same spatial domain filtering parameter is used for at least two of a plurality of repetitions transmitted by the terminal device in one random access procedure, that is, one spatial domain filtering parameter corresponds to a plurality of repetitions. As shown in FIG. 11, in four repetitions of one preamble sent by the terminal device, a same spatial domain filtering parameter is used for the $1^{st}$ repetition and the $2^{nd}$ repetition and is a spatial domain filtering parameter 0, and a same spatial domain filtering parameter is used for the $3^{rd}$ repetition and the $4^{th}$ repetition and is a spatial domain filtering parameter 1.

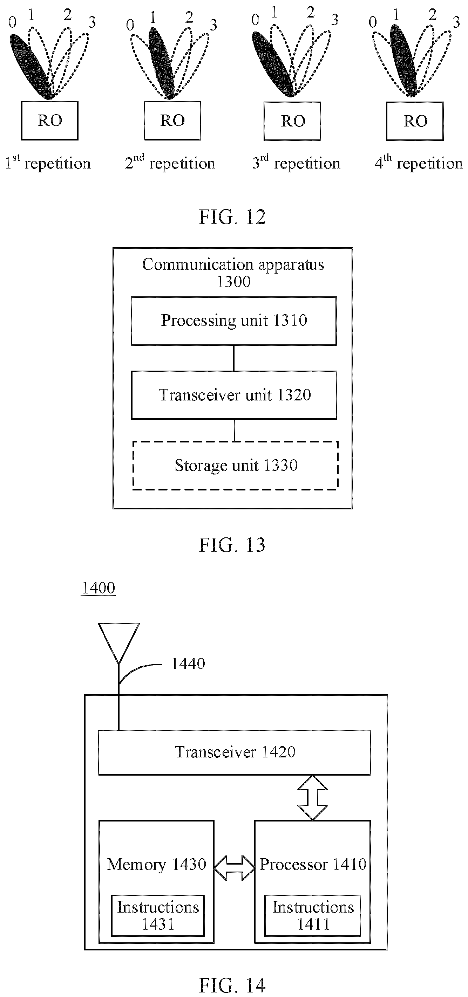

In the example shown in FIG. 11, a same spatial domain filtering parameter is used for repetitions on two adjacent ROs, or ROs on which a same spatial domain filtering parameter is used for two repetitions may not be adjacent. For example, as shown in FIG. 12, in four repetitions, a same spatial domain filtering parameter is used for the $1^{st}$ repetition and the $3^{rd}$ repetition and is a spatial domain filtering parameter 0, and a same spatial domain filtering parameter is used for the $2^{nd}$ repetition and the $4^{th}$ repetition and is a spatial domain filtering parameter 1.

For another example, a same spatial domain filtering parameter is used for a plurality of repetitions transmitted by the terminal device in one random access procedure, that is, the plurality of repetitions use a same spatial domain filtering parameter.

A correspondence between a plurality of repetitions of one preamble sent by the terminal device in a random access procedure and spatial domain filtering parameters may be configured by the network device. For example, the network device may configure, by using configuration information, that spatial domain filtering parameters used for a plurality of repetitions sent by the terminal device in a random access procedure are the same, different, or partially the same.

In an implementation, a protocol predefines or the network device preconfigures the following: a spatial domain filtering parameter used for each repetition in the plurality of repetitions in the $n^{th}$ random access procedure is the same as or different from a spatial domain filtering parameter used for each repetition in the $(n+1)^{th}$ random access procedure.

For example, the protocol may specify or the network device may preconfigure the following: a spatial domain filtering parameter used in one random access procedure for each of the plurality of repetitions sent by the terminal device and a spatial domain filtering parameter used in a previous random access procedure remain unchanged or are different. In other words, the protocol may specify or the network device may preconfigure the following: spatial domain filtering parameters used by the terminal device for some repetitions in the plurality of repetitions in two consecutive random access procedures are not allowed to change.

Optionally, a protocol predefines or the network device preconfigures the following: when a transmit power of the preamble in the $n^{th}$ random access procedure is greater than or equal to a maximum transmit power, a spatial domain filtering parameter used for at least one repetition in the plurality of repetitions in the $(n+1)^{th}$ random access procedure is allowed to be different from a spatial domain filtering parameter used for the at least one repetition in the $n^{th}$ random access procedure.

When the transmit power of the preamble that is determined based on the target received power of the preamble does not reach the maximum transmit power of the preamble, the spatial domain filtering parameters used by the terminal device for the plurality of repetitions in the two consecutive random access procedures remain unchanged, or the terminal device may change a spatial domain filtering parameter used for each of the plurality of repetitions. **In** other words, only when a current transmit power of the preamble reaches the maximum transmit power of the preamble, spatial domain filtering parameters used by the terminal device for some repetitions in the plurality of repetitions in two consecutive random access procedures are allowed to change. **In** this way, when the current transmit power of the preamble reaches the maximum transmit power, the terminal device may perform a random access procedure again by changing spatial domain filtering parameters used for some repetitions, to increase a random access success probability.

The foregoing describes in detail the methods provided in this application with reference to the accompanying drawings. The following accompanying drawings describe a communication apparatus and a communication device provided this application. To implement functions in the methods provided in this application, network elements may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

FIG. 13 is a schematic block diagram of a communication apparatus according to this application. As shown in FIG. 13, the communication apparatus 1300 may include a transceiver unit 1320.

**In** a possible design, the communication apparatus 1300 may correspond to the terminal device in the foregoing method. When the communication apparatus 1300 corresponds to the terminal device, the communication apparatus 1300 may be the entire terminal device, or the communication apparatus 1300 is configured (or used) in a chip in the terminal device, or another apparatus, module, circuit, unit, or the like that can implement the method of the terminal device.

It should be understood that the communication apparatus 1300 may include units configured to perform the method performed by the terminal device in the foregoing method embodiments. **In** addition, the units in the communication apparatus 1300 and the foregoing other operations and/or functions are used to implement corresponding procedures in the foregoing method embodiments.

Optionally, the communication apparatus 1300 may further include a processing unit 1310. The processing unit 1310 may be configured to process instructions or data, to implement corresponding operations.

It should be further understood that, when the communication apparatus 1300 is the chip configured (or used) in the terminal device, the transceiver unit 1320 in the communication apparatus 1300 may be an input/output interface or a circuit of the chip, and the processing unit 1310 in the communication apparatus 1300 may be a processor in the chip.

Optionally, the communication apparatus 1300 may further include a storage unit 1330. The storage unit 1330 may be configured to store instructions or data, and the processing unit 1310 may execute the instructions or the data stored in the storage unit, so that the communication apparatus implements corresponding operations.

It should be further understood that specific processes in which the units perform the foregoing corresponding steps are described in detail in the foregoing methods. For brevity, details are not described herein again.

In another possible design, the communication apparatus 1300 may correspond to the network device in the foregoing method. When the communication apparatus 1300 corresponds to the network device, the communication apparatus 1300 may be the entire network device, or the communication apparatus 1300 is configured (or used) in a chip in the network device, or another apparatus, module, circuit, unit, or the like that can implement the method of the network device.

It should be understood that the communication apparatus 1300 may include units configured to perform the method performed by the network device in the foregoing method embodiments. In addition, the units in the communication apparatus 1300 and the foregoing other operations and/or functions are used to implement corresponding procedures in the foregoing method embodiments.

Optionally, the communication apparatus 1300 may further include a processing unit 1310. The processing unit 1310 may be configured to process instructions or data, to implement corresponding operations.

It should be further understood that, when the communication apparatus 1300 is the chip configured (or used) in the network device, the transceiver unit 1320 in the communication apparatus 1300 may be an input/output interface or a circuit of the chip, and the processing unit 1310 in the communication apparatus 1300 may be a processor in the chip.

Optionally, the communication apparatus 1300 may further include a storage unit 1330. The storage unit 1330 may be configured to store instructions or data, and the processing unit 1310 may execute the instructions or the data stored in the storage unit, so that the communication apparatus implements corresponding operations.

It should be understood that the transceiver unit 1320 in the communication apparatus 1300 may be implemented by using a communication interface (for example, a transceiver, a transceiver circuit, an input/output interface, or a pin), for example, may correspond to a transceiver 1420 in a communication apparatus 1400 shown in FIG. 14. The processing unit 1310 in the communication apparatus 1300 may be implemented by using at least one processor, for example, may correspond to a processor 1410 in the communication apparatus 1400 shown in FIG. 14. The processing unit 1310 in the communication apparatus 1300 may alternatively be implemented by using at least one logic circuit. The storage unit 1330 in the communication apparatus 1300 may correspond to a memory 1430 in the communication apparatus 1400 shown in FIG. 14.

FIG. 14 is a diagram of a structure of a communication apparatus 1400 according to an embodiment of this application. As shown in FIG. 14, the communication apparatus 1400 includes one or more processors 1410. The processor 1410 may be configured to perform internal processing of the apparatus, to implement a specific control processing function. Optionally, the processor 1410 includes instructions 1411. Optionally, the processor 1410 may store data.

Optionally, the communication apparatus 1400 includes one or more memories 1430, configured to store instructions 1431. Optionally, the memory 1430 may further store data. The processor and the memory may be independently disposed, or may be integrated together.

Optionally, the communication apparatus 1400 may further include a transceiver 1420 and/or an antenna 1440. The transceiver 1420 may be configured to send information to another apparatus or receive information from another apparatus. The transceiver 1420 may be referred to as a transceiver machine, a transceiver circuit, an input/output interface, or the like, and is configured to implement a transceiver function of the communication apparatus 1400 by using the antenna 1440. Optionally, the transceiver 1420 includes a transmitter (transmitter) and a receiver (receiver).

The communication apparatus 1400 may be used in a communication device in the system shown in FIG. 1. The communication apparatus 1400 may correspond to a terminal device or a network device. The communication apparatus 1400 may be a communication device. Alternatively, the communication apparatus 1400 is configured in a communication device. For example, the communication apparatus 1400 may be a chip or a module configured in the communication device. The communication apparatus 1400 may perform operations of the terminal device or the network device in the foregoing method embodiments.

In this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams in this application. The general-purpose processor may be a microprocessor or any conventional processor or the like. The steps of the methods with reference to this application may be directly performed and completed by a hardware processor, or may be performed and completed by a combination of hardware in the processor and a software module.

In this application, the memory may be a non-volatile memory, such as a hard disk drive (hard disk drive, HDD) or a solid-state drive (solid-state drive, SSD), or may be a volatile memory (volatile memory), such as a random access memory (random access memory, RAM). The memory is any other medium that can carry or store expected program code in a form of an instruction or a data structure and that can be accessed by a computer, but is not limited thereto. The memory in this application may alternatively be a circuit or any other apparatus that can implement a storage function, and is configured to store program instructions and/or data.

This application further provides a processing apparatus, including a processor and a (communication) interface. The processor is configured to perform the method provided in the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processor (digital signal processor, DSP) circuit, a microcontroller unit (microcontroller unit, MCU), a programmable controller (programmable logic device, PLD), or another integrated chip.

This application further provides a computer-readable storage medium. The computer-readable storage medium stores a computer program or instructions. When the computer program or the instructions are run, the method performed by the terminal device or the network device in the foregoing method embodiments is implemented. In this way, the functions described in the foregoing embodiments may be implemented in a form of a software functional unit and sold or used as an independent product. Based on such an understanding, the technical solutions of this application essentially, or the part that makes a contribution, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk drive, a read-only memory (read-only memory, ROM), a random access memory RAM, a magnetic disk, or an optical disc.

According to the methods provided in this application, this application further provides a computer program product. The computer program product includes computer program code. When the computer program code is executed by one or more processors, an apparatus including the processor is enabled to perform the methods shown in FIG. 4, FIG. 8, and FIG. 9.

All or some of the technical solutions provided in this application may be implemented by using software, hardware, firmware, or any combination thereof. When software is used to implement embodiments, all or some of the embodiments may be implemented in a form of a computer program product. The computer program product includes one or more computer instructions. When the computer program instructions are loaded and executed on a computer, all or some of the procedures or functions according to this application are generated. The foregoing computer instructions may be stored in a computer-readable storage medium, or may be transmitted from a computer-readable storage medium to another computer-readable storage medium. The computer-readable storage medium may be any usable medium accessible to a computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

According to the methods provided in this application, this application further provides a system, including the foregoing one or more terminal devices. The system may further include the foregoing at least one network device.

In several embodiments provided in this application, it should be understood that the disclosed system, apparatus, and method may be implemented in other manners. For example, the described apparatus is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1.  A random access method, applied to a terminal device or a chip system in the terminal device, wherein the method comprises:

    determining at least one preamble for performing an $n^{th}$ random access procedure, wherein the preamble is used to request random access, and n is a positive integer;
    sending a first part of the at least one preamble to a network device in the $n^{th}$ random access procedure, wherein sending of a second part of the at least one preamble in the $n^{th}$ random access procedure is canceled; and
    determining that a count value of a preamble power ramping counter in an $(n+1)^{th}$ random access procedure is the same as a count value of the preamble power ramping counter in the $n^{th}$ random access procedure, wherein the preamble power ramping counter is configured to determine a transmit power of the at least one preamble.

2.  The method according to claim 1, wherein

    the second part comprises a part of one preamble in the at least one preamble; or
    the at least one preamble comprises a plurality of repetitions of one preamble, and the second part comprises at least a part or all of one repetition in the plurality of repetitions.

3.  The method according to claim 1 or 2, wherein a count value of a preamble transmission counter in the $(n+1)^{th}$ random access procedure is the same as a count value of the preamble transmission counter in the $n^{th}$ random access procedure.

4.  The method according to any one of claims 1 to 3, wherein the $n^{th}$ random access procedure is a 2-step random access procedure, and the method further comprises:
    canceling a physical uplink shared channel PUSCH transmission in a random access request message of the 2-step random access procedure.

5.  The method according to any one of claims 1 to 4, wherein

    a spatial domain filtering parameter used for the at least one preamble in the $n^{th}$ random access procedure is the same as a spatial domain filtering parameter used for the at least one preamble in the $(n+1)^{th}$ random access procedure; and/or
    a synchronization signal and physical broadcast channel block SSB associated with a random access channel PRACH resource used in the $n^{th}$ random access procedure is the same as an SSB associated with a PRACH resource used in the $(n+1)^{th}$ random access procedure; and/or
    a reference signal associated with the PRACH resource used in the $n^{th}$ random access procedure is the same as a reference signal associated with the PRACH resource used in the $(n+1)^{th}$ random access procedure.

6. The method according to any one of claims 1 to 5, wherein the method further comprises:

when a first condition is satisfied, sending the at least one preamble to the network device in the $(n+1)^{th}$ random access procedure, wherein

the first condition comprises that no random access response message from the network device is received and/or random access contention resolution in the $n^{th}$ random access procedure fails.

7. A random access method, applied to a terminal device or a chip system in the terminal device, wherein the method comprises:

sending a plurality of repetitions of a preamble to a network device in an $n^{th}$ random access procedure, wherein the preamble is used to request random access, and n is a positive integer; and

sending a plurality of repetitions of the preamble to the network device in an $(n+1)^{th}$ random access procedure, wherein when spatial domain filtering parameters used for the plurality of repetitions in the $(n+1)^{th}$ random access procedure are different from spatial domain filtering parameters used for the plurality of repetitions in the $n^{th}$ random access procedure, a count value of a first preamble power ramping counter in the $(n+1)^{th}$ random access procedure is the same as a count value of the first preamble power ramping counter in the $n^{th}$ random access procedure, wherein the first preamble power ramping counter is configured to determine a transmit power of at least one of the plurality of repetitions.

8. The method according to claim 7, wherein that spatial domain filtering parameters used for the plurality of repetitions in the $(n+1)^{th}$ random access procedure are different from spatial domain filtering parameters used for the plurality of repetitions in the $n^{th}$ random access procedure comprises: a second spatial domain filtering parameter set is different from a first spatial domain filtering parameter set, wherein

the first spatial domain filtering parameter set is a set of the spatial domain filtering parameters used for the plurality of repetitions in the $n^{th}$ random access procedure, the second spatial domain filtering parameter set is a set of the spatial domain filtering parameters used for the plurality of repetitions in the $(n+1)^{th}$ random access procedure, and the first preamble power ramping counter is specifically configured to determine a transmit power of each of the plurality of repetitions.

9. The method according to claim 7, wherein that spatial domain filtering parameters used for the plurality of repetitions in the $(n+1)^{th}$ random access procedure are different from spatial domain filtering parameters used for the plurality of repetitions in the $n^{th}$ random access procedure comprises: a spatial domain filtering parameter used for an $m^{th}$ repetition in the plurality of repetitions in the $(n+1)^{th}$ random access procedure is different from a spatial domain filtering parameter used for an $m^{th}$ repetition in the plurality of repetitions in the $n^{th}$ random access procedure, wherein m is a positive integer.

10. The method according to claim 9, wherein the plurality of repetitions are in one-to-one correspondence with a plurality of preamble power ramping counters, one of the plurality of preamble power ramping counters is configured to determine a transmit power of a corresponding repetition, and the $m^{th}$ repetition corresponds to the first preamble power ramping counter.

11. The method according to claim 10, wherein when a spatial domain filtering parameter used for a $k^{th}$ repetition in the plurality of repetitions in the $(n+1)^{th}$ random access procedure is the same as a spatial domain filtering parameter used for a $k^{th}$ repetition in the plurality of repetitions in the $n^{th}$ random access procedure, a count value of a second preamble power ramping counter corresponding to the $k^{th}$ repetition in the $(n+1)^{th}$ random access procedure is different from a count value of the second preamble power ramping counter in the $n^{th}$ random access procedure, wherein k is a positive integer.

12. The method according to any one of claims 7 to 11, wherein

a synchronization signal and physical broadcast channel block SSB associated with a random access channel resource used in the $n^{th}$ random access procedure is the same as an SSB associated with a random access channel resource used in the $(n+1)^{th}$ random access procedure; and/or

a reference signal associated with the random access channel resource used in the $n^{th}$ random access procedure is the same as a reference signal associated with the random access channel resource used in the $(n+1)^{th}$ random access procedure.

13. The method according to any one of claims 7 to 12, wherein the sending a plurality of repetitions of the preamble to the network device in an $(n+1)^{th}$ random access procedure comprises:

when a first condition is satisfied, sending the plurality of repetitions of the preamble to the network device in the $(n+1)^{th}$ random access procedure, wherein
the first condition comprises that no random access response message from the network device is received and/or random access contention resolution in the $n^{th}$ random access procedure fails.

14. The method according to any one of claims 7 to 13, wherein different spatial domain filtering parameters are used for different repetitions in the plurality of repetitions; or

a same spatial domain filtering parameter is used for at least two of the plurality of repetitions; or
a same spatial domain filtering parameter is used for the plurality of repetitions.

15. The method according to any one of claims 7 to 14, wherein a protocol predefines or the network device preconfigures the following: when a transmit power of the preamble in the $n^{th}$ random access procedure is greater than or equal to a maximum transmit power, a spatial domain filtering parameter used for at least one repetition in the plurality of repetitions in the $(n+1)^{th}$ random access procedure is allowed to be different from a spatial domain filtering parameter used for the at least one repetition in the $n^{th}$ random access procedure.

16. The method according to any one of claims 7 to 14, wherein a protocol predefines or the network device preconfigures the following: a spatial domain filtering parameter used for each repetition in the plurality of repetitions in the $n^{th}$ random access procedure is the same as or different from a spatial domain filtering parameter used for each repetition in the $(n+1)^{th}$ random access procedure; or
a protocol predefines or the network device preconfigures the following: spatial domain filtering parameters used for only some repetitions in the plurality of repetitions in the $n^{th}$ random access procedure are not allowed to be different from spatial domain filtering parameters used for some repetitions in the $(n+1)^{th}$ random access procedure.

17. A communication apparatus, comprising at least one processor coupled to a memory, wherein

the memory is configured to store a program or instructions; and
the at least one processor is configured to execute the program or the instructions, so that the apparatus implements the method according to any one of claims 1 to 16.

18. A computer-readable storage medium, storing instructions, wherein when the instructions are run on a computer, the computer is enabled to perform the method according to any one of claims 1 to 16.

FIG. 1

FIG. 2

| Network<br>device | | Terminal<br>device |
|---|---|---|

1. Send an Msg.A (including an RO,a preamble, and a
PUSCH transmission)

2. Send an Msg.B (including a MAC PDU, contention
resolution information, and the like)

**FIG. 3**

<u>400</u>

S401: Determine at least one preamble for performing an $n^{th}$ random
access procedure, where the preamble is used to request random access,
and n is a positive integer

S402: Send a first part of the at least one preamble in the $n^{th}$ random
access procedure, where sending of a second part of the at least one
preamble in the $n^{th}$ random access procedure is canceled

S403: Determine that a count value of a preamble ramping counter in an
$(n+1)^{th}$ random access procedure is the same as a count value of the
preamble ramping counter in the $n^{th}$ random access procedure

**FIG. 4**

| | | | | | | | | | | | | | |
|---|---|---|---|---|---|---|---|---|---|---|---|---|---|
| | | | | Preamble | | | | | | | | | |

Symbol:  0  1  2  3  4  5  6  7  8  9  10  11  12  13

**FIG. 5**

Symbol: 0  1  2  3  4  5  6  7  8  9  10  11  12  13

FIG. 6

Symbol: 0  1  2  3  4  5  6  7  8  9  10  11  12  13

FIG. 7

800

S801: Send a plurality of repetitions of a preamble to a network device in an $n^{th}$ random access procedure, where the preamble is used to request random access

S802: Send a plurality of repetitions of the preamble to the network device in an $(n+1)^{th}$ random access procedure, where when spatial domain filtering parameters used for the plurality of repetitions in the $(n+1)^{th}$ random access procedure are different from spatial domain filtering parameters used for the plurality of repetitions in the $n^{th}$ random access procedure, a count value of a first preamble power ramping counter in the $(n+1)^{th}$ random access procedure is the same as a count value of the first preamble power ramping counter in the $n^{th}$ random access procedure, where the first preamble power ramping counter is configured to determine a transmit power of the preamble

FIG. 8

FIG. 9

FIG. 10

FIG. 11

1st repetition    2nd repetition    3rd repetition    4th repetition

FIG. 12

Communication apparatus
1300

Processing unit 1310

Transceiver unit 1320

Storage unit 1330

FIG. 13

1400

1440

Transceiver 1420

Memory 1430    Processor 1410

Instructions
1431

Instructions
1411

FIG. 14

## INTERNATIONAL SEARCH REPORT

| International application No. |
| --- |
| **PCT/CN2023/116847** |

| A. | CLASSIFICATION OF SUBJECT MATTER |
| --- | --- |

H04W74/08(2009.01)i

According to International Patent Classification (IPC) or to both national classification and IPC

| B. | FIELDS SEARCHED |
| --- | --- |

Minimum documentation searched (classification system followed by classification symbols)

IPC:H04W H04Q

Documentation searched other than minimum documentation to the extent that such documents are included in the fields searched

Electronic data base consulted during the international search (name of data base and, where practicable, search terms used)

3GPP, CNTXT, DWPI, ENTXT, CNKI, IEEE: 功率, 随机, 前导码, 不变, 相同, 不同, 竞争, 计数, 空间滤波, 空域滤波, 部分, 之一, 重复, preamble, RACH, random, SSB, counter, power, spatial filter, part, same,

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114208383 A (LG ELECTRONICS INC.) 18 March 2022 (2022-03-18) description, paragraphs 235-287 | 7-18 |
| A | CN 112889341 A (QUALCOMM INC.) 01 June 2021 (2021-06-01) description, paragraphs 116-202 | 1-6, 17-18 |
| A | CN 110583091 A (LG ELECTRONICS INC.) 17 December 2019 (2019-12-17) entire document | 1-18 |
| A | US 2020252974 A1 (QUALCOMM INC.) 06 August 2020 (2020-08-06) entire document | 1-18 |
| A | WO 2019004694 A1 (SAMSUNG ELECTRONICS CO., LTD.) 03 January 2019 (2019-01-03) entire document | 1-18 |
| A | ZTE. "FL Summary #3 of Procedure for 2-step RACH" *3GPP TSG RAN WG1 #99 R1-1913539*, 22 November 2019 (2019-11-22), entire document | 1-18 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 October 2023** | **23 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/116847**

| Patent document cited in search report | | | Publication date (day/month/year) | Patent family member(s) | | | Publication date (day/month/year) |
|---|---|---|---|---|---|---|---|
| CN | 114208383 | A | 18 March 2022 | JP | 2022544329 | A | 17 October 2022 |
| | | | | US | 2021051731 | A1 | 18 February 2021 |
| | | | | US | 2023164850 | A1 | 25 May 2023 |
| | | | | EP | 3982689 | A1 | 13 April 2022 |
| | | | | KR | 20220046543 | A | 14 April 2022 |
| | | | | WO | 2021033946 | A1 | 25 February 2021 |
| CN | 112889341 | A | 01 June 2021 | US | 2020146076 | A1 | 07 May 2020 |
| | | | | WO | 2020092169 | A1 | 07 May 2020 |
| | | | | US | 2022279600 | A1 | 01 September 2022 |
| | | | | EP | 3874891 | A1 | 08 September 2021 |
| | | | | TW | 202029826 | A | 01 August 2020 |
| CN | 110583091 | A | 17 December 2019 | US | 2020068620 | A1 | 27 February 2020 |
| | | | | EP | 3621403 | A1 | 11 March 2020 |
| | | | | WO | 2018203696 | A1 | 08 November 2018 |
| | | | | JP | 2020519192 | A | 25 June 2020 |
| | | | | KR | 20190132470 | A | 27 November 2019 |
| US | 2020252974 | A1 | 06 August 2020 | EP | 3918849 | A1 | 08 December 2021 |
| | | | | WO | 2020160104 | A1 | 06 August 2020 |
| | | | | CN | 113383583 | A | 10 September 2021 |
| WO | 2019004694 | A1 | 03 January 2019 | US | 2020351853 | A1 | 05 November 2020 |
| | | | | KR | 20200012891 | A | 05 February 2020 |
| | | | | US | 2022264546 | A1 | 18 August 2022 |
| | | | | EP | 3628135 | A1 | 01 April 2020 |

Form PCT/ISA/210 (patent family annex) (July 2022)

**REFERENCES CITED IN THE DESCRIPTION**

**Patent documents cited in the description**

- CN 202211091016